# EUROPEAN PATENT APPLICATION

(11) **EP 4 385 870 A1**
(43) Date of publication of application: **19.06.2024**
(21) Application number: 23201294.8
(22) Date of filing: 02.10.2023
(51) Int. Cl.: B62K 21/12, B62K 15/00, B62M 6/40

(54) **FOLDABLE CYCLE**

(30) Priority: 07.10.2022 GB 202214766
(71) Applicant: Rayne, Damian, London W11 1LR (GB)
(72) Inventor: Rayne, Damian, London W11 1LR (GB)
(74) Representative: Kilburn & Strode LLP

(57) **Abstract**

A foldable cycle 1 having a folded configuration 13 and an unfolded configuration 2, the foldable cycle comprising a first body section 3, wherein the first body section comprises a front wheel 4 of the cycle, second body section 5 and a third body section 6, wherein the third body section comprises a rear wheel of the cycle 7. The first body section is rotationally coupled to the second body section about a first axis 8 inclined with respect to the forward direction of travel of the cycle in the unfolded configuration such that the first body section is configured to rotate about the first axis in a first direction of rotation. The third body section is rotationally coupled to the second body section about a second axis 9 inclined with respect to the forward direction of travel of the cycle in the unfolded configuration such that the third body section is configured to rotate about the second axis in a second direction of rotation.

## Description

The present invention relates to a foldable cycle. In particular, but not exclusively, the invention may be embodied as an electric-motor-assisted foldable cycle.

Many people struggle with commuting into larger cities for work, often finding that once they have taken the train or other public transport into the city, it is the final stage of getting to their destination that causes problems - this is commonly known as the "last-mile" problem. Taking further public transport such as buses, trams or similar to complete the journey can be unreliable and there is no guarantee that cycles sometimes provided to the public at docking stations will be available on arrival. With a view to alleviating this problem, it is known to use personal cycles (i.e. bicycles) or other such devices to complete the last-mile of the journey. Such cycles typically comprise a metal frame and two wheels and are powered by pedal power. However, these cycles can be cumbersome due to their weight and size and often do not fit on public transport, especially during the busy commuting hours of the day. It can also be inconvenient for people to have to power the cycles using pedal power as they may need to shower or get changed on arrival at their destination, thereby increasing their overall travel time compared to other forms of transportation which do not require manual exertion.

Foldable cycles and electric cycles and combinations of the two are known in the art and aim to solve these problems.

A known foldable cycle, such as that described in US 2015/0068828 A1, comprises three structural armatures that are pivotally interconnected along their lengths such that they may be pivoted between a closed position and an open riding position. However, in the closed position, the foldable cycle has a high centre of gravity, making it unstable to transport in the closed position.

A further known foldable cycle, such as that described in US 2011/0139530 A1, comprises a foldable chassis frame having members connected using interlocking elements such that the foldable chassis frame is folded by unlocking each interlocking element connecting the members. However, when the cycle is placed in its folded configuration, it folds into multiple disconnected parts making it difficult to transport as the user has to carry multiple parts separately.

There is also a need for more sustainable materials for use in manufacture. The quantity of plastic waste created, especially through items such as plastic bottles and plastic bags, is increasing, and only very small amounts of this plastic waste gets recycled. Therefore, it would be beneficial if a foldable cycle could be made from recycled plastic, thereby reducing its environmental impact.

Therefore there exists need for an improved foldable cycle that is more stable, more compact, and which may be made from recycled materials.

The present invention aims to alleviate, at least to a certain extent, the problems and/or address at least to a certain extent the difficulties associated with the prior art.

According to an aspect of the present invention, there is provided a foldable cycle having a folded configuration and an unfolded configuration, the foldable cycle comprising:
a first body section, wherein the first body section comprises a front wheel of the cycle;
a second body section;
a third body section, wherein the third body section comprises a rear wheel of the cycle;
wherein the first body section is rotationally coupled to the second body section about a first axis inclined with respect to the forward direction of travel of the cycle in the unfolded configuration such that the first body section is configured to rotate about the first axis in a first direction of rotation; and
wherein the third body section is rotationally coupled to the second body section about a second axis inclined with respect to the forward direction of travel of the cycle in the unfolded configuration such that the third body section is configured to rotate about the second axis in a second direction of rotation.

Advantageously, having an inclined axis of rotation of the body sections allows the body sections to fold back on themselves into the folded configuration, resulting in a more compact and easier to use. The inclined axis of rotation also allows the front wheel and the rear wheel to still be accessible in the folded configuration, meaning that in the folded configuration, the cycle can be transported and pulled along on the wheels, removing the need for the user to lift or carry the folded cycle. The term "inclined" is intended to mean the same as "angled" and, as such, the first and second axes of rotation may be inclined (or angled) at an acute angle or at an obtuse angle relative to the forward direction or travel of the cycle. Optionally, wherein the first axis is inclined with respect to the forward direction of travel of the cycle in the unfolded configuration, at an incline (or angle) in the range between 1 degree and 89 degrees, more preferably between 10 degrees and 80 degrees, more preferably between 20 degrees and 70 degrees, more preferably between 30 degrees and 60 degrees, more preferably between 40 degrees and 50 degrees. Optionally, wherein the first axis is inclined with respect to the forward direction of travel of the cycle in the unfolded configuration, at an incline (or angle) of less than 90 degrees; optionally less than 60 degrees. Optionally, wherein the first axis is inclined with respect to the forward direction of travel of the cycle in the unfolded configuration, at an incline (or angle) of less than 85, 80, 75, 70, 65, 55, 50, 45, 40, 35, 30, 25, 20, 15 or 10 degrees, or any intermediate value or range therebetween. Optionally, wherein the second axis is inclined with respect to the forward direction of travel of the cycle in the unfolded configuration, at an incline (or angle) in the range between 91 degrees and 179 degrees, more preferably between 100 degrees and 170 degrees, more preferably between 110 degrees and 160 degrees, more preferably between 120 degrees and 150 degrees, more preferably between 130 degrees and 140 degrees. Optionally, wherein the second axis is inclined with respect to the forward direction of travel of the cycle in the unfolded configuration, at an incline (or angle) of less than 180 degrees; optionally less than 150 degrees. Optionally, wherein the second axis is inclined with respect to the forward direction of travel of the cycle in the unfolded configuration, at an incline (or angle) of less than 175, 170, 165, 160, 155, 150, 145, 140, 135, 130, 125, 120, 115, 110, 105, or 100 degrees, or any intermediate value or range therebetween.

Optionally, wherein the front wheel and the rear wheel are centreless. A centreless wheel is advantageous as it reduces the weight of the foldable cycle, thereby improving the ease of which the foldable cycle can be transported in the folded configuration, as well as using less power when the wheels are being driven by the electric motor. Not only do the centreless wheels make the foldable cycle more efficient, but centreless wheels also provide an annular space where other components may be provided, giving the foldable cycle additional functionality. Another advantage of a centreless wheel is that centreless wheels do not require a roller chain. On cycles with wheels that have hubs, roller chains often fail by either coming off the cassette or chain ring, or rusting, additionally roller chains need regular maintenance such as cleaning and re-greasing. Therefore the removal of this feature improves the longevity of the cycle and removes the need for time consuming and messy maintenance of parts.

Optionally, wherein the second body section comprises a steering apparatus configured to steer the front wheel, the steering apparatus comprising a first handlebar and a second handlebar, wherein the first handlebar and the second handlebar comprise a handlebar axis of rotation about which the first and second handlebars are configured to rotate together.

Optionally, wherein the first handlebar is pivotably connected to the second handlebar such that the first handlebar and the second handlebar are reconfigurable between a handlebar folded configuration and a handlebar unfolded configuration, optionally wherein the first handlebar and the second handlebar are configured to be arranged in the handlebar folded configuration in the folded configuration of the cycle and the first handlebar and the second handlebar are configured to be in the handlebar unfolded configuration in the unfolded configuration of the cycle. Advantageously, the first and second handlebars being reconfigurable between a handlebar folded configuration and a handlebar unfolded configuration allows the cycle to be more compact in the folded configuration of the cycle.

Optionally, wherein the steering apparatus comprises a first steering member, a second steering member and a third steering member, the first steering member being coupled to the first handlebar and the second handlebar about the handlebar axis of rotation, and wherein rotation of the third steering member causes rotation of the front wheel about a steering axis of the front wheel, wherein rotation of the first steering member causes rotation of the second steering member and rotation of the second steering member causes rotation of the third steering member, so as to define a drive path between the first steering member, the second steering member, and the third steering member.

Optionally, wherein the drive path is arranged from the first handlebar and the second handlebar to the first steering member, to the second steering member, to the third steering member, to the front wheel of the foldable cycle. Advantageously, the drive path from the first steering member, to the second steering member, to the third steering member allows the front wheel, and thus the foldable cycle, to be steered by the steering apparatus. Optionally, wherein the first steering member is coupled to the first handlebar and the second handlebar about a handlebar axis of rotation, the third steering member is coupled to the front wheel such that the third steering member defines a steering axis of the front wheel, and the second steering member is rotationally coupled to the first steering member and the third steering member such that the handlebar axis of rotation is offset from the steering axis of the front wheel. Optionally, wherein the steering axis and the handlebar axis of rotation are offset from one another.

Optionally, wherein the first axis and the second axis intersect to form a point of intersection when the foldable cycle is in the unfolded configuration. Advantageously this allows the cycle to fold into a particularly compact configuration, with the first body section arranged to rotate about the first axis to fold adjacent to a first side face of the second body section and the third body section arranged to rotate about the second axis to fold adjacent to a second side face of the second body section. Optionally, wherein the point of intersection is located between the centre of the front wheel (i.e. the midpoint of the diameter of the front wheel) and the centre of the rear wheel (i.e. the midpoint of the diameter of the rear wheel). Optionally, wherein the point of intersection is located at a point between the first handlebar and the second handlebar and a wheelbase of the foldable cycle in the unfolded configuration. Optionally, wherein the point of intersection is located below a centre of rotation of one or both the front and rear wheels (i.e. the point of intersection is located below a line extending between the centre of rotation of the front and rear wheels; i.e. the point of intersection is located on the opposite side of a line extending between the centre of rotation of the front and rear wheels than the side of the line which the handlebars or a seat is located), optionally wherein the point of intersection is located above the ground, e.g. above a line extending between the lower-most portion of the front and rear wheels . Optionally, wherein the first axis and the second axis are inclined in opposite directions to each other, such that the first axis and the second axis form a V-shape when viewed from the left-side or right-side of the foldable cycle. Optionally, wherein the V-shape defines a vertex at the point of intersection, optionally wherein the vertex of the V-shape points towards the wheelbase of the foldable cycle in the unfolded configuration.

Optionally, wherein the first direction of rotation and the second direction of rotation are opposite to each other. Advantageously the first and second directions of rotation being opposite to each other allows the cycle to fold into a particularly compact configuration, with the first body section arranged to rotate about the first axis to fold adjacent to the first side face of the second body section and the third body section arranged to rotate about the second axis to fold adjacent to the second side face of the second body section. Additionally, the inclined axes of rotation of the body sections allows the body sections to stack adjacent to each other in the folded configuration (the folded configuration can therefore also be referred to as the stacked configuration). The stacked body sections create a stable cycle when in the folded configuration, making the foldable cycle easier to transport when in the folded configuration. Optionally, wherein the first direction of rotation is clockwise when viewed from the front of the foldable cycle, and the second direction of rotation is anticlockwise when viewed from the front of the foldable cycle. Optionally, wherein the first direction of rotation is anti-clockwise when viewed from the front of the foldable cycle, and the second direction of rotation is clockwise when viewed from the front of the foldable cycle.

Optionally, wherein the first body section is rotationally coupled to the second body section by a first hinge and the third body section is rotationally coupled to the second body section by a second hinge.

Optionally, wherein the first body section and the second body section comprise a rotation lock, the rotation lock comprising a locked configuration configured to prevent rotational movement of the first body section with respect to the second body section about the first axis of rotation and the rotation lock comprising an unlocked configuration configured to allow rotational movement of the first body section with respect to the second body section about the first axis of rotation. Optionally, wherein the third body section and the second body section comprise a rotation lock configured to prevent the rotational movement of the third body section with respect to the second body section. Advantageously, the rotation lock allows the foldable cycle to remain in the unfolded configuration during use by locking the rotation of the first body section with respect to the second body section or by locking the rotation of the second body section with respect to the first body section.

Optionally, wherein the rotation lock comprises a bias, wherein the bias is configured such that moving the first handlebar and the second handlebar away from the front wheel along the handlebar axis of rotation causes the rotation lock to reconfigure from the locked configuration to the unlocked configuration so as to allow rotational movement of the first body section with respect to the second body section about the first axis. Advantageously, the bias arranged in this way allows the user to easily reconfigure the cycle from the unfolded configuration to the folded configuration. Optionally, wherein the rotation lock comprises a plug and a socket, wherein the plug is biased by the bias to be received by the socket. Optionally wherein the plug and socket each comprise a set of correspondingly interlocking locking formations so as to prevent rotation of the plug and socket with respect to each other (i.e. to rotationally couple the plug and socket together) when the locking formations of the plug are in engagement with the correspondingly interlocking locking formations of the socket. Optionally, wherein the plug comprises a plurality of ridges and the socket comprises a plurality of grooves, the ridges and grooves arranged such that the ridges engage with the grooves such that rotation of the plug causes rotation of the socket (i.e. so that the plug is rotationally coupled with the socket). Optionally, wherein the steering apparatus and the front wheel are rotationally coupled via the plug and the socket, such that, when the plug and socket are rotationally coupled to each other, a drive path exists from the first handlebar and the second handlebar, to the first steering member, to the second steering member, to the third steering member, to the plug and the socket, to the front wheel when the plug is engaged with the socket and when the plug and socket are rotationally decoupled, the drive path is broken.

Optionally, wherein, in the folded configuration, the first body section, the second body section and the third body section together define a stacked configuration. Advantageously, this creates a particularly compact and space-saving cycle when in the folded configuration. Optionally, wherein the stacked configuration is such that a first side face of the first body section is adjacent to the first side face of the second body section, and a first side face of the third body section is adjacent to the second side face of the second body section. Optionally, wherein, in the stacked configuration, the first side face of the first body section contacts the first side face of the second body section, and the first side face of the third body section contacts the second side face of the second body section.

Optionally, wherein the foldable cycle comprises an electric motor configured to provide assistive and/or exclusive power to either the front wheel and/or the rear wheel and a power source configured to power the electric motor. Advantageously, the electric motor allows the user to travel at greater speeds than using pedal power alone, thus allowing users to get to their destinations quicker, reducing travel time.

Optionally, wherein the foldable cycle comprises a plurality of solar panels arranged to charge the power source. Advantageously, the solar panels provide an additional source of power for charging the power source and allowing the power source to be charged whilst in use, thus removing the need for the foldable cycle to be connected to an external power source in order to charge the power source. Optionally, the plurality of solar panels are arranged to power the motor directly.

Optionally, wherein one of the body sections comprises a first foot pedal and a second foot pedal, configured such that the rotation of the first foot pedal and the second foot pedal rotates one of the front wheel or the rear wheel, optionally wherein rotation of the first foot pedal and the second foot pedal provides charge to the power source. Advantageously, the first foot pedal and the second foot pedal provide an additional source of power for charging the power source. Advantageously, the first foot pedal and the second foot pedal can power the foldable cycle if the power source is depleted.

Optionally, wherein the front wheel comprises a guide surface, the guide surface comprising a first side and an opposing second side and/or wherein the rear wheel comprises a guide surface, the guide surface comprising a first side and an opposing second side. Advantageously, the guide surface of the front wheel may enable certain components to be more readily or more conveniently mounted to, or rotationally coupled to, or moveable around the front wheel and the guide surface of the rear wheel may enable certain components to be more readily or more conveniently mounted to, or rotationally coupled to, or moveable around the rear wheel.

Optionally, wherein the first body section comprises a first wheel-engagement means, the first wheel-engagement means comprising a first carriage and a first plurality of wheels, the first plurality of wheels being configured to engage the guide surface of the front wheel and/or wherein the third body section comprises a second wheel-engagement means, the second wheel-engagement means comprising a second carriage and a second plurality of wheels, the second plurality of wheels being configured to engage the guide surface of the rear wheel. Advantageously, the guide surface of the front wheel enables the front wheel to be circumferentially guided through the first wheel-engagement means and the guide surface of the rear wheel enables the rear wheel to be circumferentially guided through the second wheel-engagement means. The guide surface is able to support both lateral and vertical loads transmitted from the plurality of wheels.

Optionally, wherein the first plurality of wheels of the first wheel-engagement means are configured to engage the first side and/or the opposing second side of the guide surface of the front wheel and/or the second plurality of wheels of the second wheel-engagement means are configured to engage the first side and/or the opposing second side of the guide surface of the rear wheel. Advantageously, the first plurality of wheels of the front wheel engaging the first side and the opposing second side of the guide surface of the front wheel allows the first plurality of wheels to locate the front wheel relative to the carriage to allow rotational movement, but also to generally or substantially restrict or limit vertical and/or lateral movement of the carriage out of the plane of rotation of the front wheel and the second plurality of wheels of the rear wheel engaging the first side and the opposing second side of the guide surface of the rear wheel allows the second plurality of wheels to locate the rear wheel relative to the carriage to allow rotational movement, but also to generally or substantially restrict or limit vertical and/or lateral movement of the carriage out of the plane of rotation of the rear wheel.

Optionally, wherein the guide surface of the front wheel comprises a circumferential rail of the front wheel, wherein the circumferential rail of the front wheel comprises an inner circumferential surface of the circumferential rail of the front wheel and an outer circumferential surface of the circumferential rail of the front wheel, wherein the first plurality of wheels are configured to locate the inner circumferential surface of the circumferential rail of the front wheel and/or the outer circumferential surface of the circumferential rail of the front wheel so as to locate the outer circumferential surface of the circumferential rail of the front wheel relative to the first carriage and/or wherein the guide surface of the rear wheel comprises a circumferential rail of the rear wheel, wherein the circumferential rail of the rear wheel comprises an inner circumferential surface of the circumferential rail of the rear wheel and an outer circumferential surface of the circumferential rail of the rear wheel, wherein the second plurality of wheels are configured to locate the inner circumferential surface of the circumferential rail of the rear wheel and/or the outer circumferential surface of the circumferential rail of the rear wheel so as to locate the outer circumferential surface of the circumferential rail of the rear wheel relative to the first carriage. Advantageously, the plurality of wheels engaging the inner circumferential surface and the outer circumferential surface of the circumferential rail allows the plurality of wheels to locate the front wheel and/or the rear wheel relative to the carriage to allow rotational movement, but also to generally or substantially restrict or limit vertical and/or lateral movement of the carriage out of the plane of rotation of the front wheel and/ or the rear wheel.

Optionally, wherein the electric motor is configured to provide drive to the first side of the guide surface of the front wheel and the first plurality of wheels are configured to locate the opposing second side of the guide surface of the front wheel or wherein the electric motor is configured to provide drive to the first side of the guide surface of the rear wheel and the second plurality of wheels of the rear wheel are configured to locate the opposing second side of the guide surface of the rear wheel. Advantageously, this configuration of the motor and the plurality of wheels enables the motor to provide direct drive to the front wheel or the rear wheel and the plurality of wheels to locate the front wheel or the rear wheel relative to the carriage to allow rotational movement, but also to generally or substantially restrict or limit vertical and/or lateral movement of the carriage out of the plane of rotation of the front wheel or the rear wheel.

Optionally, wherein the foldable cycle comprises a reclamation alternator, the reclamation alternator being configured to engage the first side of the guide surface of the rear wheel such that kinetic energy generated by the rear wheel is transferred to the reclamation alternator and the second plurality of wheels are configured to engage the opposing second side of the guide surface of the rear wheel or the reclamation alternator being configured to engage the first side of the guide surface of the front wheel such that kinetic energy generated by the front wheel is transferred to the reclamation alternator and the first plurality of wheels are configured to engage the opposing second side of the guide surface of the front wheel. Advantageously, the reclamation alternator comprises a regenerative braking system, wherein electricity is generated and provided to the power source, therefore the reclamation alternator provides an alternative source of power to the power source. Furthermore, the plurality of wheels locate the rear wheel or the front wheel relative to the carriage to allow rotational movement, but also to generally or substantially restrict or limit vertical and/or lateral movement of the carriage out of the plane of rotation of the rear wheel or the front wheel.

Optionally, wherein one of the body sections comprises a first drive train and a second drive train. Advantageously, having multiple drive trains allows the foldable cycle to be driven in multiple ways. This accommodates any failures that may happen in one drive train, allowing the second drive train to still be used to drive the foldable cycle. Optionally, wherein the first drive train and the second drive train are connected to one of the wheels. Advantageously, this provides power to the wheels, driving the foldable cycle. Optionally, wherein the first drive train and the second drive train can operate independently of one another. Advantageously, the first drive train and the second drive train being independent of one another allows the cycle to be operated either by pedal power alone or electric power alone.

Optionally, wherein the first drive train is driven by rotation of the first foot pedal and the second foot pedal. Advantageously, the first foot pedal and the second foot pedal provide a direct drive path to the drive train, without the need for the motor. Optionally, wherein the second drive train is driven by rotation of the first foot pedal and the second foot pedal.

Optionally, wherein the second drive train is driven by the electric motor. Advantageously, the electric motor provides a direct drive path to the drive train, without the need for the first foot pedal or the second foot pedal. Optionally, wherein the first drive train is driven by the electric motor.

Optionally, wherein the first drive train is configured to drive the rear wheel. Optionally, wherein the first drive train is configured to drive the front wheel.

Optionally, wherein the second drive train is configured to drive the front wheel. Optionally, wherein the second drive train is configured to drive the rear wheel.

Optionally, wherein the foldable cycle is a bicycle or a tricycle.

According to a second aspect of the present invention, there is provided a wheel-mounting means for use in a foldable cycle comprising a wheel comprising a plane of rotation, the wheel-mounting means comprising:
a guide surface, wherein the guide surface comprises a first side and an opposing second side;
a wheel-engagement means wherein the wheel-engagement means comprises a carriage and a plurality of wheels, wherein the plurality of wheels are coupled to the carriage;
wherein the carriage is rotatable about the guide surface;
an electric motor, wherein the electric motor is coupled to the carriage;
wherein the electric motor is configured to provide drive to the first side of the guide surface so as to rotate the guide surface with respect to the carriage; and
wherein the plurality of wheels are configured to engage the opposing second side of the guide surface so as to locate the second side of the guide surface with respect to the carriage.

Optionally, wherein the plurality of wheels are coupled to the carriage such that they are spaced apart about the electric motor, wherein the electric motor is configured to provide drive to the first side of the guide surface so as to rotate the guide surface with respect to the carriage and the plurality of wheels are configured to locate the opposing second side of the guide surface with respect to the carriage. Advantageously, the electric motor and the plurality of wheels being coupled to the carriage and spaced apart about the motor allows the wheel-mounting means to provide a secure mounting connection and generally or substantially restricts or limits vertical and/or lateral movement of the carriage. Optionally, wherein the plurality of wheels and the electric motor are coupled to the carriage such that define the vertices of a triangle. Optionally, wherein the plurality of wheels and the electric motor are coupled to the carriage such that define the vertices of an isosceles triangle.

Optionally, wherein the plurality of wheels are coupled to the carriage such that the plurality of wheels define an arc, wherein the first side of the guide surface comprises a first circumference and the second side of the guide surface comprises a second circumference, wherein the arc is arranged along a segment of the first circumference of the first side of the guide surface or wherein the arc is arranged along a segment of the second circumference of the second side of the guide surface. Optionally, wherein the plurality of wheels are coupled to the carriage such that the plurality of wheels follow the first circumference of the first side of the guide surface or wherein the plurality of wheels are coupled to the carriage such that the plurality of wheels follow the second circumference of the second side of the guide surface. Advantageously, the plurality of wheels being coupled to the carriage such that the plurality of wheels define an arc allows the wheel-mounting means to provide a secure mounting connection and generally or substantially restricts or limits vertical and/or lateral movement of the carriage.

Optionally, wherein the guide surface comprises a circumferential rail wherein the circumferential rail comprises an inner circumferential surface and an outer circumferential surface, wherein the electric motor is configured to provide drive to the inner circumferential surface of the circumferential rail and the plurality of wheels are configured to engage the outer circumferential surface of the circumferential rail so as to locate the outer circumferential surface of the circumferential rail. Advantageously, the electric motor providing drive to the inner circumferential surface of the circumferential rail gives increased positional accuracy, increased dynamic accuracy and increased speed, and also minimizes the number of parts required in the wheel-mounting means. Advantageously, the plurality of wheels engaging outer circumferential surface of the circumferential rail allows the plurality of wheels to locate the outer circumferential surface of the circumferential relative to the carriage to allow rotational movement, but also to generally or substantially restrict or limit vertical and/or lateral movement of the carriage.

Optionally, wherein the guide surface comprises a circumferential rail wherein the circumferential rail comprises an inner circumferential surface and an outer circumferential surface, wherein the electric motor is configured to provide drive to the outer circumferential surface of the circumferential rail and the plurality of wheels are configured to engage the inner circumferential surface of the circumferential rail so as to locate the inner circumferential surface of the circumferential rail. Advantageously, the electric motor providing drive to the outer circumferential surface of the circumferential rail gives increased positional accuracy, increased dynamic accuracy and increased speed, and also minimizes the number of parts required in the wheel-mounting means. Advantageously, the plurality of wheels engaging inner circumferential surface of the circumferential rail allows the plurality of wheels to locate the inner circumferential surface of the circumferential relative to the carriage to allow rotational movement, but also to generally or substantially restrict or limit vertical and/or lateral movement of the carriage.

Optionally, wherein the carriage comprises a first suspension means and a second suspension means, wherein the first suspension means and the second suspension means are coupled to the carriage such that they are spaced apart about the electric motor and substantially aligned with the plane of rotation of the wheel of the foldable cycle. Advantageously, the suspension means acts as a shock absorber for when the foldable cycle is going over uneven terrain, making the journey more comfortable for the user. Furthermore, the suspension means being coupled to the carriage such that they are spaced apart about the electric motor provides suspension means at two sides the wheel mounting means so as to provide a rocking effect and thus greater suspension and shock absorption.

The present invention may be carried out in various ways and preferred embodiments of a foldable cycle in accordance with the present invention will now be described by way of example with reference to the accompanying drawings, in which:
Fig. 1 is a side, partially transparent view of a preferred embodiment of a foldable cycle according to a first embodiment of the present invention in an unfolded configuration.
Fig. 2 is a side, partially transparent, close up view of a body section of the embodiment of Fig. 1.
Fig. 3A is a side, partially transparent view of a steering apparatus of each of the embodiments of the present invention in an unfolded configuration, although other steering apparatuses may be used.
Fig. 3B is a top view of a steering apparatus of each of the embodiments of the present invention in a folded configuration, although other steering apparatuses may be used.
Fig. 3C is a top, partially transparent view of a steering apparatus of each of the embodiments of the present invention in a folded configuration, although other steering apparatuses may be used.
Fig. 3D is a top, partially transparent view a steering apparatus of each of the embodiments of the present invention in an unfolded configuration, although other steering apparatuses may be used.
Fig. 4A is a side view of one half of a rotation lock of each of the embodiments of the present invention, although other rotation locks may be used.
Fig. 4B is a top view of both halves of a rotation lock of each of the embodiments of the present invention, although other rotation locks may be used.
Fig. 4C is a side view of both halves of a rotation lock of each of the embodiments of the present invention, although other rotation locks may be used.
Fig. 5 is a perspective view of the embodiment of Fig. 1, showing the foldable cycle in a folded configuration.
Fig. 6A is a rear view of the embodiment of Fig. 1, showing the foldable cycle in a folded configuration.
Fig. 6B is a side view of the embodiment of Fig. 1, showing the foldable cycle in a folded configuration.
Fig. 6C is a front view of the embodiment of Fig. 1, showing the foldable cycle in a folded configuration.
Fig. 7 is a side, partially transparent view of a preferred embodiment of a foldable cycle according to a second embodiment of the present invention in an unfolded configuration.
Fig. 8A is a rear view of a preferred embodiment of a foldable cycle according a third embodiment of the present invention in an unfolded configuration.
Fig. 8B is a side, partially transparent view of the embodiment of Fig. 8A in an unfolded configuration.
Fig. 8C is a front view of the embodiment of Fig. 8A in an unfolded configuration.
Fig. 9 is a side, partially transparent view of the embodiment of Fig. 8A in an unfolded configuration.
Fig. 10 is a side view of the embodiment of Fig. 8A in an unfolded configuration.

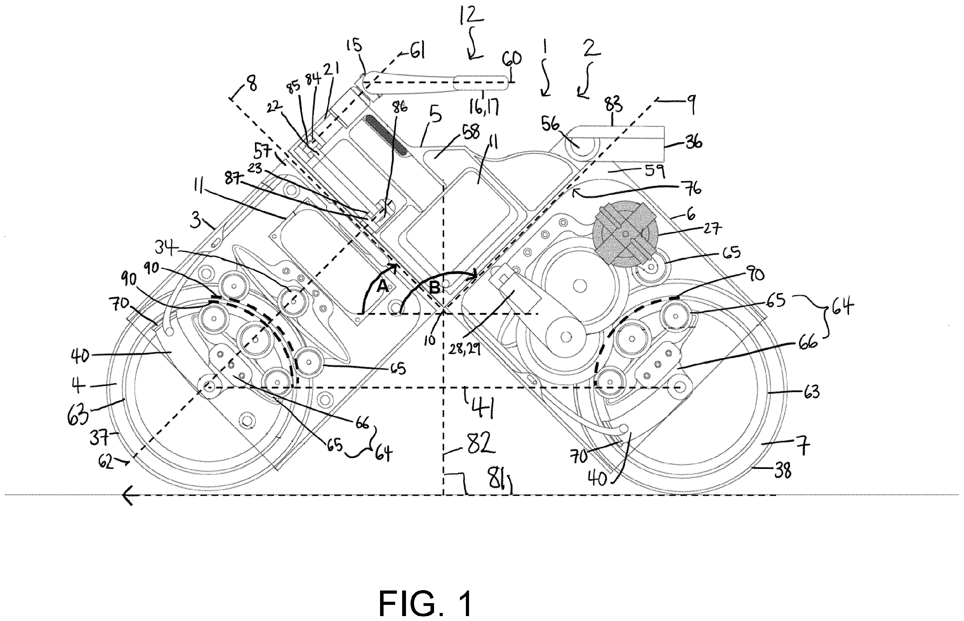

Fig. 1 shows the foldable cycle 1 in an unfolded configuration 2 and as a bicycle 12, as it comprises two ground-engageable wheels. Other embodiments are envisaged wherein the foldable cycle 1 comprises more than two wheels, e.g. three wheels and such embodiments may be referred to as a foldable tricycle. The foldable cycle 1 comprises a first body section 3, a second body section 5 and a third body section 6, the first body section 3 and the third body section 6 comprising a front wheel 4 and a rear wheel 7 respectively. The front wheel 4 is said to be a front wheel 4 because, in the forward direction of travel of the cycle 1 in the unfolded configuration 2, it is the front wheel 4 that leads, i.e. is ahead of the rear wheel 7. The front wheel 4 and the rear wheel 7 are locomotive, ground-engageable wheels for propelling the foldable cycle 1. The front wheel 4 and the rear wheel 7 are centreless, i.e. they are hubless and spokeless. The front wheel 4 and the rear wheel 7 each comprise a tyre, the front wheel 4 comprising a front tyre 37 and the rear wheel 7 comprising a rear tyre 38, the front tyre 37 and the rear tyre 38 each arranged around the outer circumference of the front wheel 4 and the rear wheel 7 respectively. Optionally, the front tyre 37 and the rear tyre 38 may be tubeless.

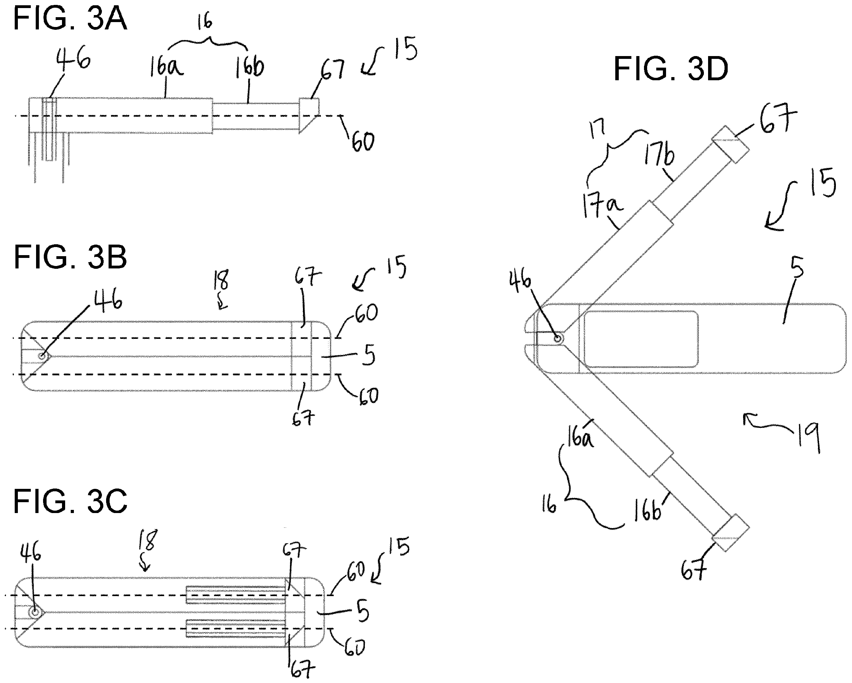

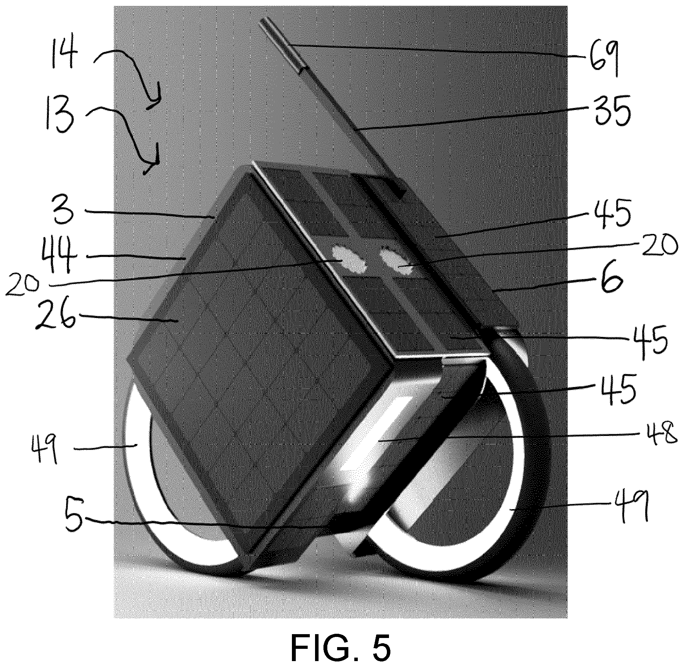

The second body section 5 comprises a steering apparatus 15 configured to steer the front wheel 4, the steering apparatus 15 comprising a first handlebar 16 and a second handlebar 17 (shown in Fig. 3), wherein the first handlebar 16 and the second handlebar 17 each have a longitudinal axis 60. The second body section 5 further comprises a seat 36 configured to allow a user to sit thereupon, the seat 36 being pivotably connected to the second body section 5. The seat 36 is pivotably connected to the second body section 5 by a pivot 56, wherein the pivot 56 is located at a front portion of the seat 36 and a rear portion of the second body section 5. In another embodiment, the seat 36 may be pivotably connected to the third body section 6 by a pivot 56, wherein the pivot 56 is located at a front portion of the seat 36 and a rear portion of the third body section 6. The seat 36 being pivotably connected to one of the body sections in this way allows the seat 36 to be folded out of the way when the foldable cycle 1 is reconfigured into the folded configuration 13 (shown in Fig. 5) to allow the first body section 3, the second body section 5 and the third body section 6 to fold adjacent to each other. The seat 36 is arranged to rotate about the pivot 56 towards the front wheel 4, such that a surface 83 of the seat 36 arranged to be sat on by the user is adjacent to the second body section 5, i.e. it is rotated about the pivot 56 by 180 degrees.

The first body section 3 is rotationally coupled to the second body section 5 about a first axis 8 inclined with respect to a virtual line 81 that defines the forward direction of travel of the cycle 1 in the unfolded configuration 2, such that the first body section 3 is configured to rotate about the first axis 8 in a first direction of rotation. The third body section 6 is rotationally coupled to the second body section 5 about a second axis 9 inclined with respect to a virtual line 81 that defines the forward direction of travel of the cycle 1 in the unfolded configuration 2 such that the third body section 6 is configured to rotate about the second axis 9 in a second direction of rotation, the first direction of rotation and the second direction of rotation being opposite to each other (i.e. one direction is clockwise when viewed from the front of the foldable cycle, and the other direction is anti-clockwise when viewed from the front of the foldable cycle). The first axis 8 and the second axis 9 are inclined with respect to the virtual line 81 that defines the forward direction of travel of the cycle 1 in the unfolded configuration 2, meaning that the first axis 8 and the second axis 9 turn away from the virtual line 81 that defines the forward direction of travel of the cycle 1 in the unfolded configuration 2 or the first axis 8 and the second axis 9 turn away from a virtual vertical line 82 that extends substantially or generally perpendicular to the virtual line 81 that defines the forward direction of travel of the cycle 1 in the unfolded configuration 2. The term "inclined" is intended to mean the same as "angled" and, as such, the first 8 and second 9 axes of rotation may be inclined (or angled) at an acute angle or at an obtuse angle relative to the forward direction or travel of the cycle 1. The first axis 8 is inclined (or angled), meaning that an acute angle is formed between the first axis 8 and the virtual line 81 that defines the forward direction of travel of the cycle 1 in the unfolded configuration 2 and the second axis 9 is inclined (or angled), meaning that an obtuse angle is formed between the second axis 9 and the virtual line 81 that defines the forward direction of travel of the cycle 1 in the unfolded configuration 2. The first axis 8 is inclined at an acute angle, Angle A, with respect to the virtual line 81 that defines the forward direction of travel of the cycle 1 and the second axis 9 is inclined at an obtuse angle, Angle B, with respect to the virtual line 81 that defines the forward direction of travel of the cycle 1. Optionally, in some embodiments, for example in this embodiment, the addition of the magnitude of Angle A to the magnitude of Angle B substantially equals 180 degrees (i.e. Angle A + Angle B = 180 degrees).

Another way of saying that the first axis 8 and the second axis 9 are inclined with respect to a virtual line 81 that defines the forward direction of travel of the cycle 1 in the unfolded configuration 2, is that the first axis 8 and the second axis 9 are inclined with respect to a wheelbase 41 of the cycle 1 in the unfolded configuration 2. The wheelbase 41 is defined by a virtual line extending between the centre of the front wheel 4 (i.e. the midpoint of the diameter of the front wheel 4 or the rotational axis of the front wheel 4) and the centre of the rear wheel 7 (i.e. the midpoint of the diameter of the rear wheel 7 or the rotational axis of the rear wheel 7) in the unfolded configuration 2. The virtual line 81 that defines the forward direction of travel of the cycle 1 in the unfolded configuration 2 and the virtual line that defines the wheelbase 41 of the cycle 1 in the unfolded configuration 2 are substantially or generally colinear.

The first axis 8 and the second axis 9 are inclined in opposite directions to each other such that the first axis 8 and the second axis 9 intersect to form a point of intersection 10 in the unfolded configuration 2 of the foldable cycle 1, the point of intersection 10 being located below the second body section 5 when the cycle 1 is in the forward direction of travel in the unfolded configuration 2. The point of intersection 10 may be located between the centre of the front wheel 4 (i.e. the midpoint of the diameter of the front wheel 4) and the centre of the rear wheel 7 (i.e. the midpoint of the diameter of the rear wheel 7) when the cycle 1 is in the forward direction of travel in the unfolded configuration 2. The point of intersection 10 may further be located between the longitudinal axes 60 of the first and the second handlebar 16, 17 and the virtual line that defines the wheelbase 41 when the cycle 1 is in the forward direction of travel in the unfolded configuration 2. The point of intersection 10 may further be located below a centre of rotation of one or both the front 4 and rear 7 wheels (i.e. the point of intersection 10 is located below a line extending between the centre of rotation of the front 4 and rear 7 wheels (i.e. the wheelbase 41); i.e. the point of intersection 10 is located on the opposite side of a line extending between the centre of rotation of the front 4 and rear 7 wheels (i.e. the wheelbase 41) than the side of the line which the handlebars 16, 17 or the seat 36 is located) but wherein the point of intersection 10 is located above the ground, e.g. above a line extending between the lower-most portion of the front 4 and rear 7 wheels. Due to the first axis 8 and the second axis 9 being inclined in opposite directions, the first axis 8 and the second axis 9 form a V-shape 76 when viewed from the left-side or right-side of the foldable cycle 1, the V-shape 76 defining a vertex wherein the vertex of the V-shape 76 and the point of intersection 10 are the same point. The vertex 10 of the V-shape 76 points towards the wheelbase 41 of the foldable cycle 1 in the unfolded configuration 2.

The first axis 8 is inclined with respect to the virtual line 81 that defines the forward direction of travel of the cycle 1 at the first angle, Angle A, wherein Angle A is in the range between 1 degree and 89 degrees, more preferably between 10 degrees and 80 degrees, more preferably between 20 degrees and 70 degrees, more preferably between 30 degrees and 60 degrees, more preferably between 40 degrees and 50 degrees. Alternatively, the first axis 8 is inclined with respect the virtual line 81 that defines the forward direction of travel of the cycle 1 at the first angle, Angle A, wherein Angle A is less than 90 degrees; optionally less than 60 degrees. In other embodiments the first axis 8 is inclined with respect the virtual line 81 that defines the forward direction of travel of the cycle 1 at the first angle, Angle A, wherein Angle A is less than 85, 80, 75, 70, 65, 55, 50, 45, 40, 35, 30, 25, 20, 15 or 10 degrees, or any intermediate value or range therebetween.

The second axis 9 is inclined with respect the virtual line 81 that defines the forward direction of travel of the cycle 1 at the second angle, Angle B, wherein Angle B is in the range between 91 degrees and 179 degrees, more preferably between 100 degrees and 170 degrees, more preferably between 110 degrees and 160 degrees, more preferably between 120 degrees and 150 degrees, more preferably between 130 degrees and 140 degrees. Alternatively, the second axis 9 is inclined with respect the virtual line 81 that defines the forward direction of travel of the cycle 1 at the second angle, Angle B, wherein Angle B is less than 180 degrees; optionally less than 150 degrees. In other embodiments the second axis 9 is inclined with respect the virtual line 81 that defines the forward direction of travel of the cycle 1 at the second angle, Angle B, wherein Angle B is less than 175, 170, 165, 160, 155, 150, 145, 140, 135, 130, 125, 120, 115, 110, 105, or 100 degrees, or any intermediate value or range therebetween.

The first body section 3 comprises a first body section housing 57, the second body section 5 comprises a second body section housing 58 and the third body section 6 comprises a third body section housing 59. The first body section housing 57 and the third body section housing 59 are open-ended rectangular cuboids, an open-ended rectangular cuboid being a cuboid with one face missing (similar to a box without a lid). Each open-ended rectangular cuboid comprises five faces, the five faces comprising two square side faces 44 (shown in Fig. 5) and three rectangular faces 45 (shown in Fig. 5). The two square side faces 44 may be opposite to each other, and the three rectangular faces 45 connect the two square side faces 44 by the longest edge of the rectangular faces 45 abutting the edges of the square side faces 44. Advantageously, the first body section housing 57 and the third body section housing 59 being open-ended rectangular cuboids allows the front wheel 4 and the rear wheel 7 to be arranged inside the first body section housing 57 and the third body section housing 59 respectively and allows any internal components to be hidden, improving the aesthetics of the foldable cycle 1 as well as protecting any internal components of the foldable cycle 1.

The front wheel 4 and the rear wheel 7 may be arranged inside the first body section housing 57 and the third body section housing 59, respectively, such that approximately half of the front wheel 4 and approximately half of the rear wheel 7 may be visible outside of their respective body section housing. Alternatively, the front wheel 4 and the rear wheel 7 may be arranged inside the first body section housing 57 and the third body section housing 59, respectively, such that more than half of the front wheel 4 and more than half of the rear wheel 7 may be visible outside of their respective housing. Alternatively, the front wheel 4 and the rear wheel 7 may be arranged inside the first body section housing 57 and the third body section housing 59, respectively, such that less than half of the front wheel 4 and less than half of the rear wheel 7 may be visible outside of the respective housing. The first body section housing 57, the second body section housing 58 and the third body section housing 59 of the foldable cycle 1 may be made from recycled plastic, for example polypropylene or polyethylene. The first body section housing 57, the second body section housing 58 and the third body section housing 59 of the foldable cycle 1 may also be made from lightweight metals or metal alloys, such as aluminium.

The steering apparatus 15 comprises a first steering member 21, a second steering member 22, a third steering member 23, a first gear 84, a second gear 85, a third gear 86 and a fourth gear 87 arranged within the second body section 5. The first gear 84, the second gear 85, third gear 86 and the fourth gear 87 may be bevel gears. The first steering member 21, the second steering member 22 and the third steering member 23 each comprise a longitudinal axis about which they are arranged to rotate. The first steering member 21 is rotationally coupled to the first handlebar 16 and the second handlebar 17 at a first end of the first steering member 21 about a handlebar axis of rotation 61, such that rotation of the first handlebar 16 and the second handlebar 17 about the handlebar axis of rotation 61 causes rotation of the first steering member 21 about the longitudinal axis of the first steering member 21. The first steering member 21 comprises the first gear 84 at an opposing second end of the first steering member 21 to the first handlebar 16 and the second handlebar 17. The second steering member 22 comprises the second gear 85 and the third gear 86 at opposing ends of the second steering member 22. The third steering member 23 is rotationally coupled to the front wheel 4 at a first end of the third steering member 23 about a steering axis 62 of the front wheel 4, such that rotation of the third steering member 23 about the longitudinal axis of the third steering member 23 causes rotation of the front wheel 4 about the steering axis 62. The third steering member 23 comprises the fourth gear 87 at a second opposing end of the third steering member 23 to the front wheel 4. The second steering member 22 is rotationally coupled to the first steering member 21, such that the first gear 84 and the second gear 85 mesh together. The second steering member 22 is rotationally coupled to the third steering member 23, such that the third gear 86 and the fourth gear 87 mesh together. Rotation of the first steering member 21 causes rotation of the second steering member 22 and rotation of the second steering member 22 causes rotation of the third steering member 23. As such a drive path exists between the first handlebar 16 and the second handlebar 17, the first steering member 21, the second steering member 22, the third steering member 23 and the front wheel 4, such that rotation of the first handlebar 16 and the second handlebar 17 about the handlebar axis of rotation 61 causes rotation of the front wheel 4 about the steering axis 62. Therefore, rotation of the first handlebar 16 and the second handlebar 17 about the handlebar axis of rotation 61 causes rotation of the front wheel 4 about the steering axis 62 of the front wheel 4.

Optionally, the second steering member 22 may be rotationally coupled to the first steering member 21 and the third steering member 23 such that the handlebar axis of rotation 61 is offset from the steering axis 62 of the front wheel 4. Optionally, the longitudinal axis of the first steering member 21 and the longitudinal axis of the third steering member 23 may be substantially or generally parallel to each other and the longitudinal axis of the second steering member 22 may be perpendicular to the longitudinal axis of the first steering member 21 and the longitudinal axis of the third steering member 23. As such the handlebar axis of rotation 61 may be substantially or generally parallel to the steering axis of the front wheel 62. In another embodiment, the handlebar axis of rotation 61 is coaxial with the steering axis 62 of the front wheel 4.

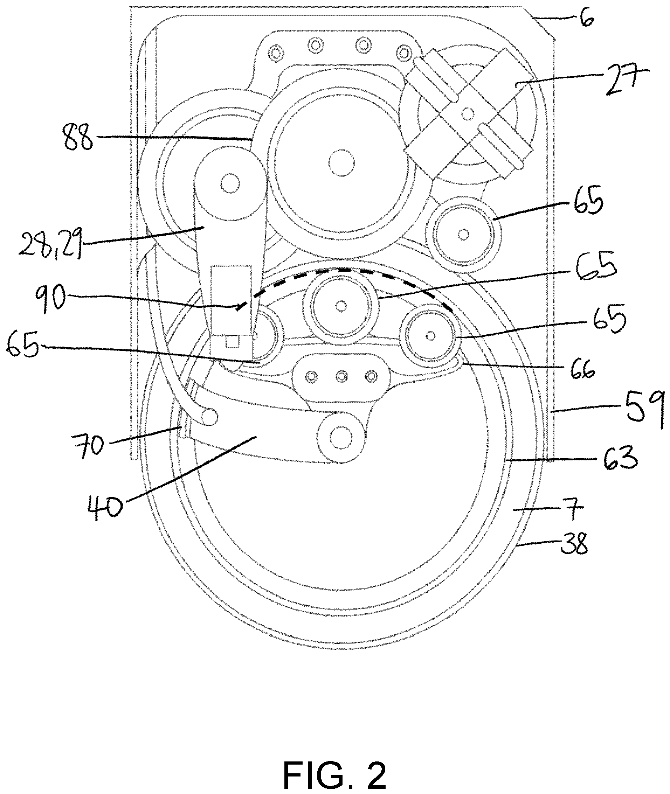

Looking at both Fig. 1 and Fig. 2, one of the first body section 3, the second body section 5 and the third body section 6 of the foldable cycle 1, in this embodiment the third body section 6, may comprise an electric motor 27 configured to provide assistive power and/or exclusive power to the front wheel 4 and/or the rear wheel 7 and a power source 11 arranged to power the electric motor 27. The power source 11 may be a cell, a battery, a supercapacitor or any other suitable power source. The electric motor 27 configured to provide assistive power and/or exclusive power to the front wheel 4 and/or the rear wheel 7 and the power source 11 arranged to power the electric motor 27 may be arranged in different body sections, such as the first body section 3 and the second body section 5, or the first body section 3 and the third body section 6, or the second body section 5 and the third body section 6. The electric motor 27 configured to provide assistive power and/or exclusive power to the front wheel 4 and/or the rear wheel 7 and the power source 11 arranged to power the electric motor 27 may be arranged in the same body section such as the first body section 3, the second body section 5, or the third body section 6.

One of the first body section 3, the second body section 5 and the third body section 6 of the foldable cycle 1 comprises a first foot pedal 28 and a second foot pedal 29 configured such that rotation of the first foot pedal 28 and the second foot pedal 29 drives the rotation of the front wheel 4 and/or the rear wheel 7, thus powering the foldable cycle 1. The first foot pedal 28 and the second foot pedal 29 optionally may be configured such that rotation of the first foot pedal 28 and the second foot pedal 29 provides charge to the power source 11. Optionally, the first foot pedal 28 and the second foot pedal 29 each comprise a foot pedal bias, the foot pedal bias is configured to unfasten the first foot pedal 28 and the second foot pedal 29 from the body section. Advantageously, this allows the cycle 1 to be reconfigured into the folded configuration 13 easily. The first foot pedal 28 and the second foot pedal 29 may be coupled to any one of the first body section 3, the second body section 5 or the third body section 6.

The foldable cycle 1 may comprise a dynamo 34, configured such that rotation of the first foot pedal 28 and/or the second foot pedal 29 provides charge to the power source 11.

The front wheel 4 may comprise a guide surface 63 and the first body section 3 may comprise and a wheel-engagement means 64, wherein the wheel-engagement means 64 is configured to engage the guide surface 63. The guide surface 63 may comprise a first side and an opposing second side wherein the wheel-engagement means 64 may be configured to engage either the first side, or the second side, or both the first side and the second side of the guide surface 63. The guide surface 63 provides a way of mounting the front wheel 4 to the foldable cycle 1. In some embodiments, the guide surface 63 may comprise a circumferential rail wherein the circumferential rail comprises an inner circumferential surface and an outer circumferential surface. The inner circumferential surface of the circumferential rail and the outer circumferential surface of the circumferential rail may be spaced apart such that the inner circumferential surface has a radius that is less than a radius of the outer circumferential surface. The inner circumferential surface of the circumferential rail may be perpendicularto the radius of the inner circumferential surface of the circumferential rail and the outer circumferential surface of the circumferential rail may be perpendicular to the radius of the outer circumferential surface of the circumferential rail. Embodiments in which the guide surface 63 is not a circumferential rail, but in which the guide surface 63 is any other suitable means for engaging the wheel-engagement means 64 and thus mounting the front wheel 4 to the foldable cycle 1, are also envisaged.

The rear wheel 7 may comprise a guide surface 63 and a wheel-engagement means 64, wherein the wheel-engagement means 64 is configured to engage the guide surface 63. The guide surface 63 may comprise a first side and an opposing second side wherein the wheel-engagement means 64 may be configured to engage either the first side, or the second side, or both the first side and the second side of the guide surface 63. The first side of the guide surface 63 may comprise a first circumference and the second side of the guide surface 63 may comprise a second circumference. The guide surface 63 provides a way of mounting the rear wheel 7 to the foldable cycle 1. In some embodiments, the guide surface 63 may comprise a circumferential rail wherein the circumferential rail comprises an inner circumferential surface and an outer circumferential surface. The inner circumferential surface of the circumferential rail and the outer circumferential surface of the circumferential rail may be spaced apart such that the inner circumferential surface has a radius that is less than a radius of the outer circumferential surface. The inner circumferential surface of the circumferential rail may be perpendicular to the radius of the inner circumferential surface of the circumferential rail and the outer circumferential surface of the circumferential rail may be perpendicular to the radius of the outer circumferential surface of the circumferential rail. Embodiments in which the guide surface 63 is not a circumferential rail, but in which the guide surface 63 is any other suitable means for engaging the wheel-engagement means 64 and thus mounting the rear wheel 7 to the foldable cycle 1, are also envisaged.

The wheel-engagement means 64 of the first body section 3 comprises a carriage 66 and a plurality of wheels 65 configured to engage the guide surface 63, the plurality of wheels 65 being coupled to the carriage 66. The guide surface 63 of the front wheel 4 may enable certain components to be more readily or more conveniently mounted to, or rotationally coupled to, or moveable around the front wheel 4. The guide surface 63 of the front wheel 4 enables the front wheel 4 to be circumferentially guided through the wheel-engagement means 64. The guide surface 63 is able to support both lateral and vertical loads transmitted from the plurality of wheels 65. The plurality of wheels 65 of the wheel-engagement means 64 of the first body section 3 are configured to locate the front wheel 4 relative to the carriage 66 to allow rotational movement, but also to generally or substantially restrict or limit vertical and/or lateral movement of the carriage 66 out of the plane of rotation of the front wheel 4.

The wheel-engagement means 64 of the third body section 6 comprises a carriage 66 and a plurality of wheels 65 configured to engage the guide surface 63, the plurality of wheels 65 being coupled to the carriage 66. The guide surface 63 of the rear wheel 7 may enable certain components to be more readily or more conveniently mounted to, or rotationally coupled to, or moveable around the rear wheel 7. The guide surface 63 of the rear wheel 7 enables the rear wheel 7 to be circumferentially guided through the wheel-engagement means 64. The guide surface 63 is able to support both lateral and vertical loads transmitted from the plurality of wheels 65. The plurality of wheels 65 of the wheel-engagement means 64 of the third body section 6 are configured to locate the rear wheel 7 relative to the carriage 66 to allow rotational movement, but also to generally or substantially restrict or limit vertical and/or lateral movement of the carriage 66 out of the plane of rotation of the rear wheel 7.

Optionally, the plurality of wheels 65 of the wheel-engagement means 64 of the first body section 3 may be arranged to have an equal number of wheels 65 on the first side of the guide surface 63 and the second side of the guide surface 63. Optionally, the plurality of wheels 65 of the wheel-engagement means 64 of the first body section 3 may be arranged to have a differing number of wheels 65 on the first side of the guide surface 63 and the second side of the guide surface 63. The plurality of wheels 65 of the wheel-engagement means 64 of the first body section 3 are configured to engage the guide surface 63 of the front wheel 4 and to enable rotational movement of the front wheel 4.

The plurality of wheels 65 of the wheel-engagement means 64 of the first body section 3 may be arranged on the carriage 66 such that the plurality of wheels 65 are equally spaced along the width of the carriage 66. In embodiments where there are two or more wheels 65 arranged on the first side of the guide surface 63 of the front wheel 4, the plurality of wheels 65 are arranged on the carriage 66 such that an arc 90 extends between the plurality of wheels 65. The arc 90 is arranged along a segment of the first circumference of the first side of the guide surface 63 of the front wheel 4 such that the plurality of wheels 65 follow the first circumference of the first side of the guide surface 63 of the front wheel 4, i.e. the plurality of wheels 65 run along the first circumference of the first side of the guide surface 63 of the front wheel 4.

In embodiments where there are two or more wheels 65 arranged on the second side of the guide surface 63 of the front wheel 4, the plurality of wheels 65 are arranged on the carriage 66 such that an arc 90 extends between the plurality of wheels 65. The arc 90 is arranged along a segment of the second circumference of the second side of the guide surface 63 of the front wheel 4 such that the plurality of wheels 65 follow the second circumference of the second side of the guide surface 63 of the front wheel 4, i.e. the plurality of wheels 65 run along the second circumference of the second side of the guide surface 63 of the front wheel 4.

In some embodiments, the second side of the guide surface 63 of the front wheel 4 may comprise the front tyre 37.

Optionally, the plurality of wheels 65 of the wheel-engagement means 64 of the third body section 6 may be arranged to have an equal number of wheels 65 on the first side of the guide surface 63 and the second side of the guide surface 63. Optionally, the plurality of wheels 65 of the wheel-engagement means 64 of the third body section 6 may be arranged to have a differing number of wheels 65 on the first side of the guide surface 63 and the second side of the guide surface 63. The plurality of wheels 65 of the wheel-engagement means 64 of the third body section 6 are configured to engage the guide surface 63 of the rear wheel 7 and to enable rotational movement of the rear wheel 7.

The plurality of wheels 65 of the wheel-engagement means 64 of the third body section 6 may be arranged on the carriage 66 such that the plurality of wheels 65 are equally spaced along the width of the carriage 66. In embodiments where there are two or more wheels 65 arranged on the first side of the guide surface 63 of the rear wheel 7, the plurality of wheels 65 are arranged on the carriage 66 such that an arc 90 extends between the plurality of wheels 65. In embodiments where there are two or more wheels 65 arranged on the second side of the guide surface 63 of the rear wheel 7, the plurality of wheels 65 are arranged on the carriage 66 such that an arc 90 extends between the plurality of wheels 65. The arc 90 is arranged along a segment of the second circumference of the second side of the guide surface 63 of the rear wheel 7 such that the plurality of wheels 65 follow the second circumference of the second side of the guide surface 63 of the rear wheel 7, i.e. the plurality of wheels 65 run along the second circumference of the second side of the guide surface 63 of the rear wheel 7.

In some embodiments, the second side of the guide surface 63 of the rear wheel 7 may comprise the rear tyre 38.

The foldable cycle 1 comprises a first drive train and a second drive train, the first drive train and the second drive train are arranged to drive the rotation of either the front wheel 4 or the rear wheel 7 or both the front wheel 4 and the rear wheel 7. The first drive train may comprise the first foot pedal 28, the second foot pedal 29 and the rear wheel 7 (or front wheel 4) wherein rotation of the first foot pedal 28 and the second foot pedal 29 drives the first drive train, and as such the rear wheel 7 (or the front wheel 4). Rotation of the first foot pedal 28 and the second foot pedal 29 causes rotation of the rear wheel 7 (or the front wheel 4), and therefore the plurality of wheels 65 engage the guide surface 63 of the rear wheel 7, causing the rear wheel 7 (or the front wheel 4) to rotate in its correct alignment. The second drive train may comprise the electric motor 27, a drive wheel 88 arranged to engage the guide surface 63 of the rear wheel 7 (or the front wheel 4) and the rear wheel 7 (or the front wheel 4), wherein the electric motor 27 is arranged to drive the second drive train and as such the rear wheel 7. The electric motor 27 causes rotation of the drive wheel 88, the drive wheel 88 thus engages the guide surface 63 of the rear wheel 7 (or the front wheel 4), causing the rear wheel 7 (or the front wheel 4) to rotate.

In some embodiments, it is envisaged that the electric motor 27 engages the first side of the guide surface 63 of the rear wheel 7 (or the front wheel 4) so as to provide direct drive to the rear wheel 7 (or the front wheel 4) and the plurality of wheels 65 of the rear wheel 7 are arranged on the opposing second side of the guide surface 63 of the rear wheel 7 (or front wheel 4) such that the plurality of wheels 65 are arranged to locate the rear wheel 7 (or front wheel 4) by engaging the second side of the guide surface 63.

Optionally, a number of the plurality of wheels 65 (e.g. one or two or three or four) are arranged to locate the front wheel 4 and a number of the plurality of wheels 65 (e.g. one or two or three or four) are arranged to form a part of the first drive train or the second drive train to provide drive to front wheel 4.

Optionally, a number of the plurality of wheels 65 (e.g. one or two or three or four) are arranged to locate the rear wheel 7 and a number of the plurality of wheels 65 (e.g. one or two or three or four) are arranged to form a part of the first drive train or the second drive train to provide drive to rear wheel 7.

The first drive train and the second drive train are independent of one another to allow drive to be provided to the front wheel 4 and/or the rear wheel 7 by the first foot pedal 28 and the second foot pedal 29 or the electric motor 27. The first drive train and the second drive train may both be arranged in the same body section (i.e. the first drive train and the second drive train may both be arranged in the first body section 3 or the first drive train and the second drive train may both be arranged in the second body section 5 or the first drive train and the second drive train may both be arranged in the third body section 6). Optionally, the first drive train and the second drive train may both be arranged in different body sections (i.e. one of the first drive train and the second drive train may be arranged in the first body section 3 and one of the first drive train and the second drive train may be arranged in the second body section 5, or one of the first drive train and the second drive train may be arranged in the first body section 3 and one of the first drive train and the second drive train may be arranged in the third body section 6, or one of the first drive train and the second drive train may be arranged in the second body section 5 and one of the first drive train and the second drive train may be arranged in the third body section 6), such that one drive train provides drive to the front wheel 4 and one drive train provides drive to the rear wheel 7.

The front wheel 4 and the rear wheel 7 each comprise a brake 40, configured to slow the foldable cycle 1 down. The brake 40 is coupled to the carriage 66, and when the brake 40 is applied, an end portion 70 of the brake 40 is arranged to engage the guide surface 63 and exert a force that slows the rotation of the front wheel 4 and/or the rear wheel 7. The brake 40 may comprise a brake pad, for example a rubber brake pad. The brake 40 described herein is the brake of each of the embodiments of the present invention, although other brakes may be used.

Looking now at both Fig. 1 and Figs. 3A- 3D, the steering apparatus 15 comprises the first handlebar 16 and a second handlebar 17. The first handlebar 16 is rotationally coupled to the second handlebar 17 by a pivot 46 such that the first handlebar 16 and the second handlebar 17 are reconfigurable from a handlebar unfolded configuration 19 (Fig. 3D) to a handlebar folded configuration 18 (Figs. 3B - 3C). The first handlebar 16 and the second handlebar 17 are configured to rotate towards each other about the pivot 46 from a first position in the handlebar unfolded configuration 19 to a second position in the handlebar folded configuration 18, and to rotate away from each other about the pivot 46 from the second position in the handlebar folded configuration 18 to the first position in the handlebar unfolded configuration 19. When the first handlebar 16 and second handlebar 17 are in the handlebar folded configuration 18, the first handlebar 16 and the second handlebar 17 are adjacent to each other. In other embodiments when the first handlebar 16 and second handlebar 17 are in the handlebar folded configuration 18, the first handlebar 16 and the second handlebar 17 are arranged to contact each other. In the handlebar folded configuration, the longitudinal axis 60 of the first handlebar 16 and the longitudinal axis 60 of the second handlebar 17 may be substantially or generally parallel to one another.

The first handlebar 16 and the second handlebar 17 are in the handlebar folded configuration 18 when the foldable cycle 1 is in the folded configuration 13 (Fig. 5). The first handlebar 16 and the second handlebar 17 are in the handlebar unfolded configuration 19 when the foldable cycle 1 is in the unfolded configuration 2. In the handlebar unfolded configuration 19, the first handlebar 16 and the second handlebar 17 are locked in position by a handlebar lock so as to allow the first handlebar 16 and the second handlebar 17 to be used to steer the foldable cycle 1 by rotating the first handlebar 16 and the second handlebar 17 about a handlebar axis of rotation 61, whilst the foldable cycle 1 is in use. The first handlebar 16 and the second handlebar 17 are each arranged to telescopically extend along the longitudinal axis 60 of the first handlebar 16 and the second handlebar 17 and telescopically retract along the longitudinal axis 60 of the first handlebar 16 and the second handlebar 17, such that the first handlebar 16 and the second handlebar 17 are extended in the handlebar unfolded configuration 19 and retracted in the handlebar folded configuration 18. The first handlebar 16 and the second handlebar 17 each comprise a hollow first member 16a, 17a and a second member 16b, 17b, wherein the second member 16b, 17b is arranged to be slideably received within the hollow first member 16a, 17a as the outer diameter of the second member 16b, 17b is configured to be smaller than the inner diameter of the hollow first member 16a, 17a such that the second member 16b, 17b can fit inside the hollow first member 16a, 17a. In the extended position, the second members 16b, 17b are visible to the user and in the retracted position the second members 16b, 17b are not visible to the user, as they are arranged inside of the hollow first members 16a, 17a. A stop 67 is arranged at the end of each of the second members 16b, 17b of the first handlebar 16 and the second handlebar 17 configured to limit the extent to which each of the second members 16b, 17b of the first handlebar 16 and the second handlebar 17 are retractable within the hollow first members 16a, 17a.

Optionally, the longitudinal axis 60 of the first handlebar 16 and the longitudinal axis 60 of the second handlebar 17 may be substantially or generally parallel to the first axis 8. In another embodiment, the longitudinal axis 60 of the first handlebar 16 and the longitudinal axis 60 of the second handlebar 17 may be substantially or generally parallel to the virtual line 81 that defines the forward direction of travel of the cycle 1 in the unfolded configuration 2. The steering apparatus 15 as described in Fig. 1 and Figs. 3A to 3D is the steering apparatus of each of the embodiments of the present invention, although other steering apparatuses may be used.

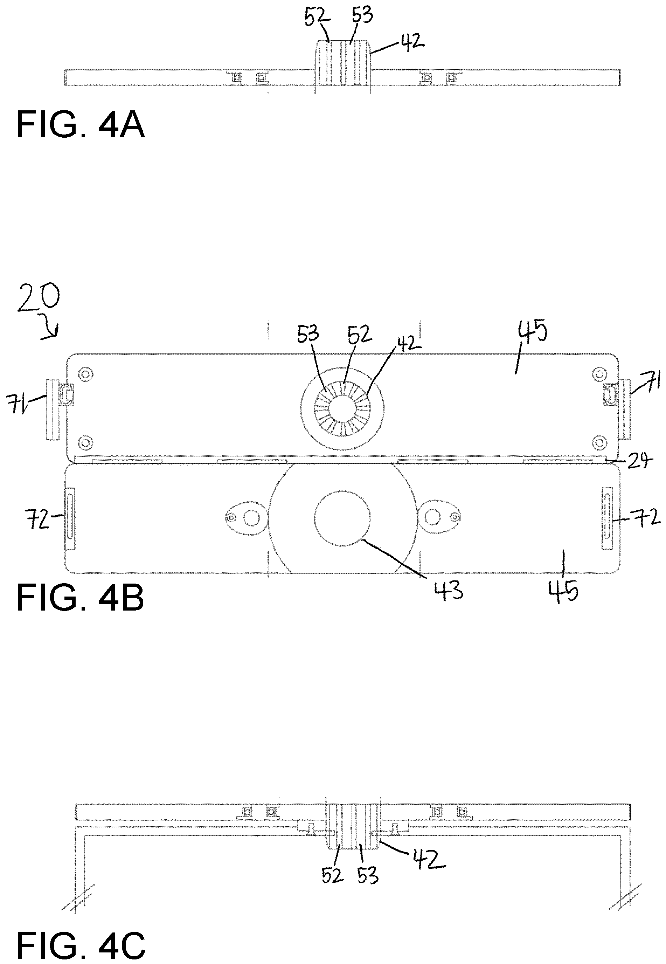

Figs. 4A - 4C show a rotation lock 20 arranged between two body sections of each of the embodiments of the foldable cycle 1, for example the first body section 3 (Fig. 1) and the second body section 5 (Fig. 1) or the second body section 5 and the third body section 6 (Fig. 1), the rotation lock 20 having a locked configuration and an unlocked configuration. The first body section 3 and the second body section 5 (or the second body section 5 and the third body section 6) may be rotationally coupled to each other by a hinge 24, the hinge 24 being arranged along one of the longest edges of the first body section 3 and the second body section 5 (or the second body section 5 and the third body section 6). The rotation lock 20 may be arranged on one of the rectangular faces 45 on any one of the first body section 3, the second body section 5 and/or the third body section 6. The rotation lock 20 prevents rotational movement (i.e. clockwise rotation when viewed from the front of the foldable cycle or anti-clockwise rotation when viewed from the front of the foldable cycle) of the first body section 3 with respect to the second body section 5 (or the third body section 6 with respect to the second body section 5) about the first axes 8 (Fig. 1) (or the second axes 9 (Fig. 1)) when the rotation lock 20 is in the locked configuration. The rotation lock 20 allows rotational movement (i.e. clockwise rotation when viewed from the front of the foldable cycle or anti-clockwise rotation when viewed from the front of the foldable cycle) of the first body section 3 with respect to the second body section 5 (or the third body section 6 with respect to the second body section 5) about the first axes 8 (or the second axes 9) when the rotation lock 20 is in the unlocked configuration.

The rotation lock 20 may comprise a clamp lever 71 and a clamp recess 72. The clamp lever 71 may be arranged on one body section and the clamp recess 72 may be arranged on the adjacent body section, for example the clamp lever 71 may be arranged on the first body section 3 and the clamp recess 72 may be arranged on the second body section 5 or the clamp lever 71 may be arranged on the second body 5 section and the clamp recess 72 may be arranged on the third body section 6. The clamp lever 71 and the clamp recess 72 form a corresponding pair such that, the clamp lever 71 is arranged to engage with the clamp recess 72 when the rotation lock is in the locked configuration so as to provide a mechanical locking means that prevents rotation of the first body section 3 with respect to the second body section 5 (or the third body section 6 with respect to the second body section 5) about the first axes 8 (or the second axes 9). The clamp lever 71 is arranged to be disengaged from the clamp recess 72 in order for the rotation lock 20 to be reconfigured from the locked configuration to the unlocked configuration. The clamp lever 71 may be arranged so that there is one clamp lever 71 at one end of the rectangular face 45 of any one of the first body section 3, the second body section 5 and/or the third body section 6 and a second clamp lever 71 at the opposing end of the rectangular face 45 of any one of the first body section 3, the second body section 5 and/or the third body section 6. The clamp recess 72 may be arranged correspondingly to the clamp lever 71 so that there is one clamp recess 72 at one end of the rectangular face 45 of any one of the first body section 3, the second body section 5 and/or the third body section 6 and a second clamp recess 72 at the opposing end of the rectangular face 45 of any one of the first body section 3, the second body section 5 and/or the third body section 6.

The rotation lock 20 may optionally comprise a plug 42 and a socket 43. The plug 42 is biased to be received by the socket 43 by a bias, the bias may be a helical spring, a bow spring, an elastomeric material, or any other suitable material. The bias is arranged such that moving the first handlebar 16 and the second handlebar 17 (Figs. 1 and 3) away from the front wheel 4 (Fig. 1) along the handlebar axis of rotation 61 (Fig. 1) reconfigures the rotation lock 20 from the locked configuration to the unlocked configuration so as to allow rotational movement of the first body section 3 with respect to the second body section 5 (or the third body section 6 with respect to the second body section 5). The plug 42 may be arranged in the centre of the rectangular face 45 of any one of the first body section 3, the second body section 5 and/or the third body section 6, at a midpoint between the two clamp levers 71. The socket 43 may be arranged in the centre of the rectangular face 45 of any one of the first body section 3, the second body section 5 and/or the third body section 6, at a midpoint between the two clamp recesses 72. The rotation lock 20 as described in Figs. 4A - 4C is the rotation lock of each of the embodiments of the present invention, although other rotation locks may be used.

Looking at both Fig. 1 and Figs. 4A - 4C, the steering apparatus 15 and the front wheel 4 are rotationally coupled via the plug 42 and the socket 43. The third steering member 23 and the plug 42 are rotationally coupled such that rotation of the first handlebar 16 and the second handlebar 17 about the handlebar axis of rotation 61 causes rotation of the plug 42. The socket 43 and the front wheel 4 are rotationally coupled such that rotation of the socket 43 causes rotation of the front wheel 4. The plug 42 comprises a plurality of ridges 52 arranged around the outer surface 53 of the plug 42 and the socket 43 comprises a plurality of grooves arranged around the inner surface of the socket 43, the plurality of ridges 52 and the plurality of grooves are arranged such that the ridges 52 engage with the grooves so that rotation of the plug 42 causes rotation of the socket 43. The plug 42 and the socket 43 may be concentric with the steering axis 62 of the front wheel 4. Rotation of the first handlebar 16 and the second handlebar 17 about the handlebar axis of rotation 61 causes rotation of the front wheel 4 about the steering axis 62 of the front wheel 4 when the plug 42 is engaged with the socket 43. Rotation of the first handlebar 16 and the second handlebar 17 about the handlebar axis of rotation 61 does not cause rotation of the front wheel 4 about the steering axis 62 of the front wheel 4 when the plug 42 is not engaged with the socket 43. The steering apparatus 15 and rotation lock 20 as described in Fig. 1 and Figs. 4A - 4C are the steering apparatus and rotation lock of each of the embodiments of the present invention, although other steering apparatuses and rotation locks may be used.

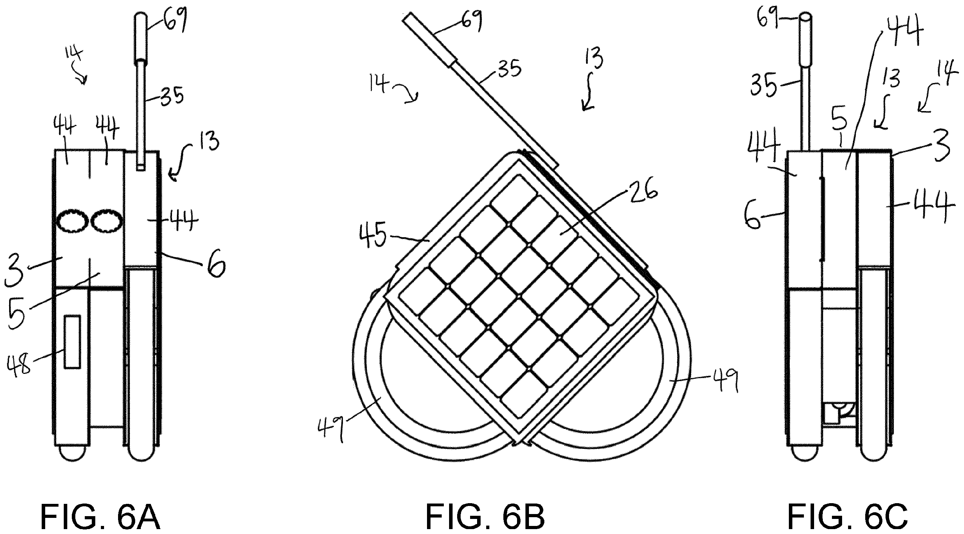

Fig. 5 and Fig. 6 show the embodiment of Fig. 1 in the folded configuration 13 and includes a plurality of solar panels 26 on the side faces 44 and the rectangular faces 45 of the first body section 3, the second body section 5 and the third body section 6 of the foldable cycle 1, the plurality of solar panels arranged to charge the power source 11. Optionally, the plurality of solar panels 26 are arranged only on the side faces 44 of the first body section 3, the second body section 5 and the third body section 6 foldable cycle 1. Optionally, the plurality of solar panels 26 are arranged only on the rectangular faces 45 of the first body section 3, the second body section 5 and the third body section 6 foldable cycle 1. The plurality of solar panels 26 may optionally power the electric motor 27 directly. Furthermore, it is advantageous to provide the solar panels 26 on the side faces 44 of the first body section 3, the second body section 5 and the third body section 6 as these are the faces with the largest surface area and can therefore gain the most power from solar energy. The first body section 3, the second body section 5 and the third body section 6 are stacked together in the folded configuration 13 and so may also be referred to as the stacked configuration 14. In the folded configuration 13 a first side face 44 of the first body section 3 is adjacent with a first side face 44 of the second body section 5 and a first side face 44 of the third body section 6 is adjacent with a second side face 44 of the second body section 5, so as to form the stacked configuration 14. Optionally, the first side face 44 of the first body section 3 may contact the first side face 44 of the second body section 5 and the first side face 44 of the third body section 6 may contact the second side face 44 of the second body section 5, so as to form the stacked configuration 14.

The first body section 3, the second body section 5 and/or the third body section 6 may comprise one or more lights 48, e.g. headlights, which, in the example of Fig. 5, are provided on the rectangular face 45 of the first body section 3. Optionally, a light 49 may be provided around the circumference of the front wheel 4 and/or the rear wheel 7. The lights 48, 49 increase the visibility of the foldable cycle 1, especially when the foldable cycle is used in the dark. The lights 48, 49 may also be provided on the back of the seat 36 (Fig. 1), so that the foldable cycle 1 is visible from behind. The lights 48, 49 may be powered by the power source 11.

To reconfigure the foldable cycle 1 from the unfolded configuration 2 seen in Fig. 1 to the folded configuration 13 seen in Fig. 5 and Fig. 6, the first body section 3 is arranged to be rotated by a user about the first axis 8 (Fig. 1) in the first direction of rotation such that the first side face 44 of the first body section 3 is adjacent to the first side face 44 of the second body section 5. The third body section 6 is arranged to be rotated by a user about the second axis 9 (Fig. 1) in the second direction of rotation such that the first side face 44 of the third body section 6 is adjacent to the second side face 44 of the second body section 5. Alternatively, the first body section 3 is arranged to be rotated about the first axis 8 by a first motor and the third body section 6 is arranged to be rotated about the second axis 9 by a second motor. The foldable cycle 1 is only able to be reconfigured from the unfolded configuration 2 to the folded configuration 13 when the rotation lock 20 is in the unlocked configuration. The first body section 3 rotates in only one direction and the third body section 6 only rotates in another direction, the first direction of rotation and the second direction of rotation being opposite to each other (i.e. one direction is clockwise when viewed from the front of the foldable cycle, and the other direction is anti-clockwise when viewed from the front of the foldable cycle), allowing the foldable cycle 1 to fold into the folded configuration 13. The first body section 4, the second body section 5 and the third body section 6 together are substantially cuboidal in the folded configuration 13. An advantage of the cuboidal shape is that the cuboidal shape forms a compact cycle 1 in the folded configuration 13 and provides space for internal components to be provided. The folded configuration 13 may be approximately the size of a piece of luggage. Advantageously, this allows the foldable cycle 1 to be stored in the luggage racks of public transport.

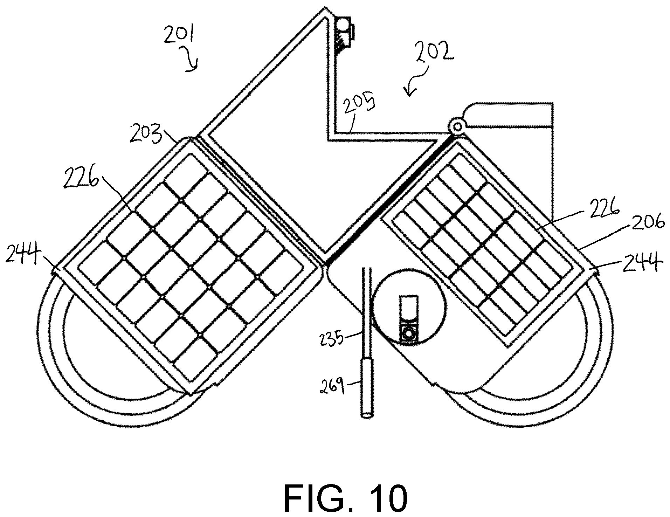

When the foldable cycle 1 is in the folded configuration 13, a handle 35 is provided to transport the foldable cycle 1 in the folded configuration 13. The handle 35 has a first position when the foldable cycle 1 is being used in the folded configuration 13, wherein in the first position the handle 35 is arranged away from the foldable cycle 1 such that an end portion 69 of the handle 35 is arranged to be held by the user. The user can manoeuvre the foldable cycle 1 on the front wheel 4 and the rear wheel 7 using the handle 35, allowing the foldable cycle 1 to be transported on the front wheel 4 and the rear wheel 7, meaning that the user does not have to carry the foldable cycle 1 when it is in the folded configuration 13.The handle 35 has a second position when the foldable cycle 1 is not in use in the folded configuration 13 (i.e. is being stored away), wherein in the second position the handle 35 is arranged to be folded away, adjacent to one of the first body section 3, the second body section 5 or the third body section 6. The handle 35 is held in either the first position or the second position by any suitable means, such as a bias (e.g. a spring that is stretched when the handle 35 is between the first and second position and less stretched when the handle 35 is in the first position or the second position) or a detent means. The rotation of the front wheel 4 and/or the rear wheel 7 when the foldable cycle 1 is in the folded configuration 13 provides charge to the power source 11. Advantageously, the rotation of the front wheel 4 and/or the rear wheel 7 when the foldable cycle 1 is in the folded configuration 13 provides an additional source of power for charging the power source 11. When the foldable cycle 1 is in the unfolded configuration 2, the handlebar 35 can be used as a kickstand 35 (further described and shown the embodiment of Fig. 10, but suitable for use in all embodiments of the foldable cycle 1). All features described by Fig. 5 and Fig. 6 are the features of each of the embodiments of the present invention, although other features may be used.

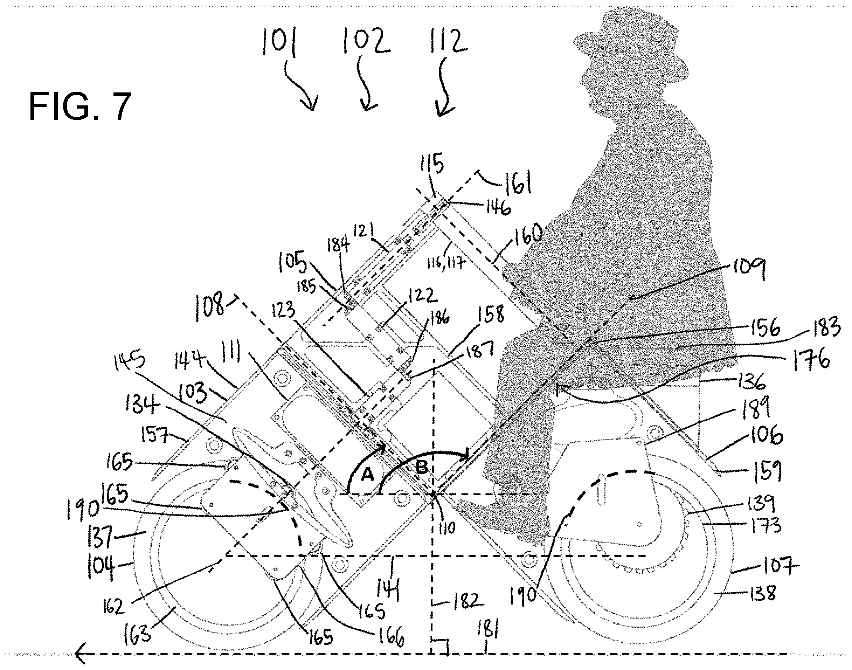

The foldable cycle 101 of Fig. 7 shows the foldable cycle 101 in an unfolded configuration 102 and as a bicycle 112, as it comprises two wheels. Other embodiments are envisaged wherein the foldable cycle 101 comprises more than two wheels, e.g. three wheels and such embodiments may be referred to as a foldable tricycle. The foldable cycle 101 comprises a first body section 103, a second body section 105 and a third body section 106, the first body section 103 and the third body section 106 comprising a front wheel 104 and a rear wheel 107 respectively. The front wheel 104 is said to be a front wheel 104 because, in the forward direction of travel of the cycle 101 in the unfolded configuration 102, it is the front wheel 104 that leads, i.e. is ahead of the rear wheel 107. The front wheel 104 and the rear wheel 107 are locomotive, ground-engageable wheels for propelling the foldable cycle 101. The front wheel 104 and the rear wheel 107 are centreless, i.e. they are hubless and spokeless. The front wheel 104 and the rear wheel 107 each comprise a tyre, the front wheel 104 comprising a front tyre 137 and the rear wheel 107 comprising a rear tyre 138, the front tyre 137 and the rear tyre 138 each arranged around the outer circumference of the front wheel 104 and the rear wheel 107 respectively. The front tyre 137 and the rear tyre 138 may be tubeless.

The second body section 105 comprises a steering apparatus 115 configured to steer the front wheel 4, the steering apparatus 115 comprising a first handlebar 116 and a second handlebar 117 (shown in Fig. 3), wherein the first handlebar 116 and the second handlebar 117 each have a longitudinal axis 60. The second body section 105 further comprises a seat 136 configured to allow a user to sit thereupon, the seat 136 being pivotably connected to the second body section 105. The seat 136 is pivotably connected to the second body section 105 by a pivot 156, wherein the pivot 156 is located at a front portion of the seat 136 and a rear portion of the second body section 105. In another embodiment, the seat 136 may be pivotably connected to the third body section 106 by a pivot 156, wherein the pivot 156 is located at a front portion of the seat 136 and a rear portion of the third body section 106. The seat 136 being pivotably connected to one of the body sections in this way allows the seat 136 to be folded out of the way when the foldable cycle 101 is reconfigured into the folded configuration (not shown in figures for the second embodiment, but the folded configuration for the second embodiment is further described below) to allow the first body section 103, the second body section 105 and the third body section 106 to fold adjacent to each other. The seat 136 is arranged to rotate about the pivot 156 towards the front wheel 104, such that a surface 183 of the seat 136 arranged to be sat on by the user is adjacent to the second body section 105, i.e. it is rotated about the pivot 156 by 180 degrees.

The first body section 103 is rotationally coupled to the second body section 105 about a first axis 108 inclined with respect to a virtual line 181 that defines the forward direction of travel of the cycle 101 in the unfolded configuration 102, such that the first body section 103 is configured to rotate about the first axis 108 in a first direction of rotation. The third body section 106 is rotationally coupled to the second body section 105 about a second axis 109 inclined with respect to a virtual line 181 that defines the forward direction of travel of the cycle 101 in the unfolded configuration 102 such that the third body section 106 is configured to rotate about the second axis 109 in a second direction of rotation, the first direction of rotation and the second direction of rotation being opposite to each other (i.e. one direction is clockwise when viewed from the front of the foldable cycle, and the other direction is anti-clockwise when viewed from the front of the foldable cycle). The first axis 108 and the second axis 109 are inclined with respect to a virtual line 181 that defines the forward direction of travel of the cycle 101 in the unfolded configuration 102, meaning that the first axis 108 and the second axis 109 turn away from a virtual line 181 that defines the forward direction of travel of the cycle 101 in the unfolded configuration 102 or the first axis 108 and the second axis 109 turn away from a virtual vertical line 182 that extends substantially or generally perpendicular to the virtual line 181 that defines the forward direction of travel of the cycle 101 in the unfolded configuration 102. The term "inclined" is intended to mean the same as "angled" and, as such, the first 108 and second 109 axes of rotation may be inclined (or angled) at an acute angle or at an obtuse angle relative to the forward direction or travel of the cycle 101. The first axis 108 is inclined (or angled), meaning that an acute angle is formed between the first axis 108 and the virtual line 181 that defines the forward direction of travel of the cycle 101 in the unfolded configuration 102 and the second axis 109 is inclined (or angled), meaning that an obtuse angle is formed between the second axis 109 and the virtual line 181 that defines the forward direction of travel of the cycle 101 in the unfolded configuration 102. The first axis 108 is inclined at an acute angle, Angle A, with respect to the forward direction of travel of the cycle 101 and the second axis 109 is inclined at an obtuse angle, Angle B, with respect to the forward direction of travel of the cycle 101. Optionally, in some embodiments, for example in this embodiment, the addition of the magnitude of Angle A to the magnitude of Angle B substantially equals 180 degrees (i.e. Angle A + Angle B = 180 degrees).

Another way of saying that the first axis 108 and the second axis 109 are inclined with respect to a virtual line 181 that defines the forward direction of travel of the cycle 101 in the unfolded configuration 102, is that the first axis 108 and the second axis 109 are inclined (or angled) with respect to a wheelbase 141 of the cycle 101 in the unfolded configuration 102. The wheelbase 141 is defined by a virtual line extending between the centre of the front wheel 104 (i.e. the midpoint of the diameter of the front wheel 104) and the centre of the rear wheel 107 (i.e. the midpoint of the diameter of the rear wheel 107) in the unfolded configuration 102. The virtual line that defines the forward direction of travel of the cycle 101 in the unfolded configuration 102 and the virtual line that defines the wheelbase 141 of the cycle 101 in the unfolded configuration 102 are substantially or generally colinear.

The first axis 108 and the second axis 109 are inclined in opposite directions to each other such that the first axis 108 and the second axis 109 intersect to form a point of intersection 110 in the unfolded configuration 102 of the foldable cycle 101, the point of intersection 110 being located below the second body section 105 when the cycle 101 is in the forward direction of travel in the unfolded configuration 102. The point of intersection 110 may be located between the centre of the front wheel 104 (i.e. the midpoint of the diameter of the front wheel 104) and the centre of the rear wheel 107 (i.e. the midpoint of the diameter of the rear wheel 107) when the cycle 101 is in the forward direction of travel in the unfolded configuration 102. The point of intersection 110 may further be located between the longitudinal axes 160 of the first and the second handlebar 116, 117 and the virtual line that defines the wheelbase 141 when the cycle 101 is in the forward direction of travel in the unfolded configuration 102. The point of intersection 110 may further be located below a centre of rotation of one or both the front 104 and rear 107 wheels (i.e. the point of intersection 110 is located below a line extending between the centre of rotation of the front 104 and rear 107 wheels (i.e. the wheelbase 141); i.e. the point of intersection 110 is located on the opposite side of a line extending between the centre of rotation of the front 104 and rear 107 wheels (i.e. the wheelbase 141) than the side of the line which the handlebars 116, 117 or the seat 136 is located) but wherein the point of intersection 110 is located above the ground, e.g. above a line extending between the lower-most portion of the front 104 and rear 107 wheels. Due to the first axis 108 and the second axis 109 being inclined in opposite directions, the first axis 108 and the second axis 109 form a V-shape 176 when viewed from the left-side or right-side of the foldable cycle 1, the V-shape 176 defining a vertex wherein the vertex of the V-shape 176 and the point of intersection 110 are the same point. The vertex 110 of the V-shape 176 points towards the wheelbase 141 of the foldable cycle 101 in the unfolded configuration 102.

The first axis 108 is inclined with respect to a virtual line 181 that defines the forward direction of travel of the cycle 101 at the first angle, Angle A, wherein Angle A is in the range between 1 degree and 89 degrees, more preferably between 10 degrees and 80 degrees, more preferably between 20 degrees and 70 degrees, more preferably between 30 degrees and 60 degrees, more preferably between 40 degrees and 50 degrees. Alternatively, the first axis 108 is inclined with respect to a virtual line 181 that defines the forward direction of travel of the cycle 101 at the first angle, Angle A, wherein Angle A is less than 90 degrees; optionally less than 60 degrees. In other embodiments the first axis 108 is inclined with respect to a virtual line 181 that defines the forward direction of travel of the cycle 101 at the first angle, Angle A, wherein Angle A is less than 85, 80, 75, 70, 65, 55, 50, 45, 40, 35, 30, 25, 20, 15 or 10 degrees, or any intermediate value or range therebetween.

The second axis 109 is inclined with respect the virtual line 181 that defines the forward direction of travel of the cycle 101 at the second angle, Angle B, wherein Angle B is in the range between 91 degrees and 179 degrees, more preferably between 100 degrees and 170 degrees, more preferably between 110 degrees and 160 degrees, more preferably between 120 degrees and 150 degrees, more preferably between 130 degrees and 140 degrees. Alternatively, the second axis 109 is inclined with respect the virtual line 181 that defines the forward direction of travel of the cycle 101 at the second angle, Angle B, wherein Angle B is less than 180 degrees; optionally less than 150 degrees. In other embodiments the second axis 109 is inclined with respect the virtual line 81 that defines the forward direction of travel of the cycle 101 at the second angle, Angle B, wherein Angle B is less than 175, 170, 165, 160, 155, 150, 145, 140, 135, 130, 125, 120, 115, 110, 105, or 100 degrees, or any intermediate value or range therebetween.

The first body section 103 comprises a first body section housing 157, the second body section 105 comprises a second body section housing 158 and the third body section 106 comprises a third body section housing 159. The first body section housing 157 and the third body section housing 159 are open-ended rectangular cuboids, an open-ended rectangular cuboid being a cuboid with one face missing (similar to a box without a lid). Each open-ended rectangular cuboid comprises five faces, the five faces comprising two square side faces 144 and three rectangular faces 145. The two square side faces 144 may be opposite to each other, and the three rectangular faces 145 connect the two square side faces 144 by the longest edge of the rectangular faces 145 abutting the edges of the square side faces 144. Advantageously, the first body section housing 157 and the third body section housing 159 being open-ended rectangular cuboids allows the front wheel 104 and the rear wheel 107 to be arranged inside the first body section housing 157 and the third body section housing 159 respectively and allows any internal components to be hidden, improving the aesthetics of the foldable cycle 101 as well as protecting any internal components of the foldable cycle 101.

The front wheel 104 and the rear wheel 107 may be arranged inside the first body section housing 157 and the third body section housing 159, respectively, such that approximately half of the front wheel 104 and approximately half of the rear wheel 107 may be visible outside of their respective body section housing. Alternatively, the front wheel 104 and the rear wheel 107 may be arranged inside the first body section housing 157 and the third body section housing 159, respectively, such that more than half of the front wheel 104 and more than half of the rear wheel 107 may be visible outside of their respective housing. Alternatively, the front wheel 104 and the rear wheel 107 may be arranged inside the first body section housing 157 and the third body section housing 159, respectively, such that less than half of the front wheel 104 and less than half of the rear wheel 107 may be visible outside of the respective housing. The first body section housing 157, the second body section housing 158 and the third body section housing 159 of the foldable cycle 101 may be made from recycled plastic, for example polypropylene or polyethylene. The first body section housing 157, the second body section housing 158 and the third body section housing 159 of the foldable cycle 101 may also be made from lightweight metals or metal alloys, such as aluminium.

The steering apparatus 115 comprises a first steering member 121, a second steering member 122, a third steering member 123, a first gear 184, a second gear 185, a third gear 186 and a fourth gear 187 arranged within the second body section 105. The first gear 184, the second gear 185, third gear 186 and the fourth gear 187 may be bevel gears. The first steering member 121, the second steering member 122 and the third steering member 123 each comprise a longitudinal axis about which they are arranged to rotate. The first steering member 121 is rotationally coupled to the first handlebar 116 and the second handlebar 117 at a first end of the first steering member 121 about a handlebar axis of rotation 161, such that rotation of the first handlebar 116 and the second handlebar 117 about the handlebar axis of rotation 161 causes rotation of the first steering member 121 about the longitudinal axis of the first steering member 121. The first steering member 121 comprises the first gear 184 at an opposing second end of the first steering member 121 to the first handlebar 116 and the second handlebar 117. The second steering member 122 comprises the second gear 185 and the third gear 186 at opposing ends of the second steering member 122. The third steering member 123 is rotationally coupled to the front wheel 104 at a first end of the third steering member 123 about a steering axis 162 of the front wheel 104, such that rotation of the third steering member 123 about the longitudinal axis of the third steering member 123 causes rotation of the front wheel 104 about the steering axis 162. The third steering member 123 comprises the fourth gear 187 at a second opposing end of the third steering member 123 to the front wheel 104. The second steering member 122 is rotationally coupled to the first steering member 121, such that the first gear 184 and the second gear 185 mesh together. The second steering member 122 is rotationally coupled to the third steering member 123, such that the third gear 186 and the fourth gear 187 mesh together. Rotation of the first steering member 121 causes rotation of the second steering member 122 and rotation of the second steering member 122 causes rotation of the third steering member 123. As such a drive path exists between the first handlebar 116 and the second handlebar 117, the first steering member 121, the second steering member 122, the third steering member 123 and the front wheel 104, such that rotation of the first handlebar 116 and the second handlebar 117 about the handlebar axis of rotation 161 causes rotation of the front wheel 104 about the steering axis 162. Therefore, rotation of the first handlebar 116 and the second handlebar 117 about the handlebar axis of rotation 161 causes rotation of the front wheel 104 about the steering axis 162 of the front wheel 104.

Optionally, the second steering member 122 may be rotationally coupled to the first steering member 121 and the third steering member 123 such that the handlebar axis of rotation 161 is offset from the steering axis 162 of the front wheel 104. The longitudinal axis of the first steering member 121 and the longitudinal axis of the third steering member 123 may be substantially or generally parallel to each other and the longitudinal axis of the second steering member 122 may be perpendicular to the longitudinal axis of the first steering member 121 and the longitudinal axis of the third steering member 123. As such the handlebar axis of rotation 161 may be substantially or generally parallel to the steering axis of the front wheel 162. In another embodiment, the handlebar axis of rotation 161 is coaxial with the steering axis 162 of the front wheel 104.

One of the first body section 103, the second body section 105 and the third body section 106 of the foldable cycle 101, in this embodiment the third body section 106, may comprise an electric motor configured to provide assistive power and/or exclusive power to the front wheel 104 and/or the rear wheel 107 and a power source 111 arranged to power the electric motor, in Fig. 7 the electric motor is hidden by a motor casing 189. The power source 111 may be a cell, a battery, a supercapacitor or any other suitable power source. In the second embodiment of the foldable cycle 101, the electric motor configured to provide assistive power and/or exclusive power to the front wheel 104 and/or the rear wheel 107 and the power source 111 arranged to power the electric motor are arranged in different body sections, the power source 111 being arranged in the first body section 103 and the electric motor being arranged in the third body section 106. However, the electric motor configured to provide assistive power and/or exclusive power to the front wheel 104 and/or the rear wheel 107 and the power source 111 arranged to power the electric motor may optionally be in any two body sections, such as the first body section 103 and the second body section 105, or the first body section 103 and the third body section 106, or the second body section 105 and the third body section 106. The electric motor configured to provide assistive power and/or exclusive power to the front wheel 104 and/or the rear wheel 107 and the power source 111 arranged to power the electric motor may be arranged in the same body section such as the first body section 103, the second body section 105, or the third body section 106.

One of the first body section 103, the second body section 105 and the third body section 106 of the foldable cycle 101 comprises a first foot pedal 128 and a second foot pedal 129 (the first foot pedal 128 and second foot pedal 129 are not shown in Fig. 7 but do form a part of the second embodiment) configured such that rotation of the first foot pedal 128 and the second foot pedal 129 drives the rotation of the front wheel 104 and/or the rear wheel 107, thus powering the foldable cycle 101. The first foot pedal 128 and the second foot pedal 129 optionally may be configured such that rotation of the first foot pedal 128 and the second foot pedal 129 provides charge to the power source 111. Optionally, the first foot pedal 128 and the second foot pedal 129 each comprise a foot pedal bias, the foot pedal bias is configured to unfasten the first foot pedal 128 and the second foot pedal 129 from the body section. Advantageously, this allows the cycle 101 to be reconfigured into the folded configuration 113 easily. The first foot pedal 128 and the second foot pedal 129 may be coupled to any one of the first body section 103, the second body section 105 or the third body section 106.

The foldable cycle 101 may comprise a dynamo 134, configured such that rotation of the first foot pedal 128 and/or the second foot pedal 129 provides charge to the power source 111.

The front wheel 104 may comprise a guide surface 163 and the first body section 103 may comprise a wheel-engagement means 164, wherein the wheel-engagement means 164 is configured to engage the guide surface 163. The guide surface 163 may comprise a first side and an opposing second side wherein the wheel-engagement means 164 may be configured to engage either the first side, or the second side, or both the first side and the second side of the guide surface 163. The first side of the guide surface 163 may comprise a first circumference and the second side of the guide surface 163 may comprise a second circumference. The guide surface 163 provides a way of mounting the front wheel 104 to the foldable cycle 101. In some embodiments, the guide surface 163 may comprise a circumferential rail wherein the circumferential rail comprises an inner circumferential surface and an outer circumferential surface. The inner circumferential surface of the circumferential rail and the outer circumferential surface of the circumferential rail may be spaced apart such that the inner circumferential surface has a radius that is less than a radius of the outer circumferential surface. The inner circumferential surface of the circumferential rail may be perpendicularto the radius of the inner circumferential surface of the circumferential rail and the outer circumferential surface of the circumferential rail may be perpendicular to the radius of the outer circumferential surface of the circumferential rail. Embodiments in which the guide surface 163 is not a circumferential rail, but in which the guide surface 163 is any other suitable means for engaging the wheel-engagement means 164 and thus mounting the front wheel 104 to the foldable cycle 101, are also envisaged.

The rear wheel 107 may comprise a guide surface 163 and a wheel-engagement means 164, wherein the wheel-engagement means 164 is configured to engage the guide surface 163. The guide surface 163 may comprise a first side and an opposing second side wherein the wheel-engagement 164 means may be configured to engage either the first side, or the second side, or both the first side and the second side of the guide surface 163. The guide surface 163 provides a way of mounting the rear wheel 107 to the foldable cycle 101. In some embodiments, the guide surface 163 may comprise a circumferential rail wherein the circumferential rail comprises an inner circumferential surface and an outer circumferential surface. The inner circumferential surface of the circumferential rail and the outer circumferential surface of the circumferential rail may be spaced apart such that the inner circumferential surface has a radius that is less than a radius of the outer circumferential surface. The inner circumferential surface of the circumferential rail may be perpendicular to the radius of the inner circumferential surface of the circumferential rail and the outer circumferential surface of the circumferential rail may be perpendicular to the radius of the outer circumferential surface of the circumferential rail. Embodiments in which the guide surface 163 is not a circumferential rail, but in which the guide surface 163 is any other suitable means for engaging the wheel-engagement means 164 and thus mounting the rear wheel 107 to the foldable cycle 101, are also envisaged.

The wheel-engagement means 164 of the first body section 103 comprises a carriage 166 and a plurality of wheels 165 configured to engage the guide surface 163, the plurality of wheels 165 being coupled to the carriage 166. The guide surface 163 of the front wheel 104 may enable certain components to be more readily or more conveniently mounted to, or rotationally coupled to, or moveable around the front wheel 104. The guide surface 163 of the front wheel 104 enables the front wheel 104 to be circumferentially guided through the wheel-engagement means 164. The guide surface 163 is able to support both lateral and vertical loads transmitted from the plurality of wheels 165. The plurality of wheels 165 of the wheel-engagement means 164 of the first body section 203 are configured to locate the front wheel 104 relative to the carriage 166 to allow rotational movement, but also to generally or substantially restrict or limit vertical and/or lateral movement of the carriage 166 out of the plane of rotation of the front wheel 104.

The wheel-engagement means 164 of the third body section 106 comprises a carriage 166 and a plurality of wheels 165 configured to engage the guide surface 163, the plurality of wheels 165 being coupled to the carriage 166. The guide surface 163 of the rear wheel 107 may enable certain components to be more readily or more conveniently mounted to, or rotationally coupled to, or moveable around the rear wheel 107. The guide surface 163 of the rear wheel 107 enables the rear wheel 107 to be circumferentially guided through the wheel-engagement means 164. The guide surface 163 is able to support both lateral and vertical loads transmitted from the plurality of wheels 165. The plurality of wheels 165 of the wheel-engagement means 164 of the third body section 106 are configured to locate the rear wheel 107 relative to the carriage 166 to allow rotational movement, but also to generally or substantially restrict or limit vertical and/or lateral movement of the carriage 166 out of the plane of rotation of the rear wheel 107.

Optionally, the plurality of wheels 165 of the wheel-engagement means 164 of the first body section 103 may be arranged to have an equal number of wheels 165 on the first side of the guide surface 163 and the second side of the guide surface 163. Optionally, the plurality of wheels 165 165 of the wheel-engagement means 164 of the first body section 103 may be arranged to have a differing number of wheels 165 on the first side of the guide surface 163 and the second side of the guide surface 163. The plurality of wheels 165 165 of the wheel-engagement means 164 of the first body section 103 are configured to engage the guide surface 163 of the front wheel 104 and to enable rotational movement of the front wheel 104.

The plurality of wheels 165 of the wheel-engagement means 164 of the first body section 103 may be arranged on the carriage 166 such that the plurality of wheels 165 are equally spaced along the width of the carriage 166. In embodiments where there are two or more wheels 165 arranged on the first side of the guide surface 163 of the front wheel 104, the plurality of wheels 165 are arranged on the carriage 166 such that an arc 190 extends between the plurality of wheels 165. The arc 190 is arranged along a segment of the first circumference of the first side of the guide surface 163 of the front wheel 104 such that the plurality of wheels 165 follow the first circumference of the first side of the guide surface 163 of the front wheel 104, i.e. the plurality of wheels 165 run along the first circumference of the first side of the guide surface 163 of the front wheel 104.

In embodiments where there are two or more wheels 165 arranged on the second side of the guide surface 163 of the front wheel 104, the plurality of wheels 165 are arranged on the carriage 166 such that an arc 190 extends between the plurality of wheels 165.The arc 190 is arranged along a segment of the second circumference of the second side of the guide surface 163 of the front wheel 104 such that the plurality of wheels 165 follow the second circumference of the second side of the guide surface 163 of the front wheel 104, i.e. the plurality of wheels 165 run along the second circumference of the second side of the guide surface 163 of the front wheel 104.

In some embodiments, the second side of the guide surface 163 of the front wheel 104 may comprise the front tyre 137.

Optionally, the plurality of wheels 165 of the wheel-engagement means 164 of the third body section 106 may be arranged to have an equal number of wheels 165 on the first side of the guide surface 163 and the second side of the guide surface 163. Optionally, the plurality of wheels 165 of the wheel-engagement means 164 of the third body section 106 may be arranged to have a differing number of wheels 65 on the first side of the guide surface 163 and the second side of the guide surface 163. The plurality of wheels 165 of the wheel-engagement means 164 of the third body section 106 are configured to engage the guide surface 163 of the rear wheel 107 and to enable rotational movement of the rear wheel 107.

The plurality of wheels 165 of the wheel-engagement means 164 of the third body section 106 may be arranged on the carriage 166 such that the plurality of wheels 165 are equally spaced along the width of the carriage 166. In embodiments where there are two or more wheels 165 arranged on the first side of the guide surface 163 of the rear wheel 107, the plurality of wheels 165 are arranged on the carriage 166 such that an arc 190 extends between the plurality of wheels 165. In embodiments where there are two or more wheels 165 arranged on the second side of the guide surface 163 of the rear wheel 107, the plurality of wheels 165 are arranged on the carriage 166 such that an arc 190 extends between the plurality of wheels 165. The arc 190 is arranged along a segment of the second circumference of the second side of the guide surface 163 of the rear wheel 107 such that the plurality of wheels 165 follow the second circumference of the second side of the guide surface 163 of the rear wheel 107, i.e. the plurality of wheels 165 run along the second circumference of the second side of the guide surface 163 of the rear wheel 107.

In some embodiments, the second side of the guide surface 163 of the rear wheel 107 may comprise the rear tyre 138.

The foldable cycle 101 comprises a first drive train and a second drive train, the first drive train and the second drive train are arranged to drive the rotation of either the front wheel 104, or the rear wheel 107 or both the front wheel 104 and the rear wheel 107. The first drive train may comprise the first foot pedal 128, the second foot pedal 129 and the rear wheel 107 (or front wheel 104) wherein rotation of the first foot pedal 128 and the second foot pedal 129 drives the first drive train, and as such the rear wheel 107 (or the front wheel 104). Rotation of the first foot pedal 128 and the second foot pedal 129 causes rotation of the rear wheel 107 (or the front wheel 104), and therefore the plurality of wheels 165 engage the guide surface163 of the rear wheel 107 (or the front wheel), causing the rear wheel 107 (or the front wheel 104) to rotate in its correct alignment. The second drive train may comprise the electric motor, a pinion 139 configured to engage a rack 173 on the guide surface 163 of the rear wheel 107, wherein the electric motor is arranged to drive the second drive train and as such the rear wheel 107. The electric motor causes rotation of the pinion 139, the pinion 139 thus engages the rack 173 of the rear wheel 107, causing the rear wheel 107 to rotate.

In some embodiments, it is envisaged that the electric motor engages the first side of the guide surface 163 of the rear wheel 107 (or the front wheel 104) so as to provide direct drive to the rear wheel 107 (or the front wheel 104) and the plurality of wheels 165 of the rear wheel 107 are arranged on the opposing second side of the guide surface 163 of the rear wheel 107 (or front wheel 104) such that the plurality of wheels 165 are arranged to locate the rear wheel 107 (or front wheel 104) by engaging the second side of the guide surface 163.

Optionally, a number of the plurality of wheels 165 (e.g. one or two or three or four) are arranged to locate the front wheel 104 and a number of the plurality of wheels 165 (e.g. one or two or three or four) are arranged to form a part of the first drive train or the second drive train to provide drive to front wheel 104.

Optionally, a number of the plurality of wheels 165 (e.g. one or two or three or four) are arranged to locate the rear wheel 107 and a number of the plurality of wheels 165 (e.g. one or two or three or four) are arranged to form a part of the first drive train or the second drive train to provide drive to rear wheel 107.

The first drive train and the second drive train are independent of one another to allow drive to be provided to one of the front wheel 104 and/or the rear wheel 107 by the first foot pedal 128 and the second foot pedal 129 and/or the electric motor. The first drive train and the second drive train may both be arranged in the same body section (i.e. the first drive train and the second drive train may both be arranged in the first body section 103 or the first drive train and the second drive train may both be arranged in the second body section 105 or the first drive train and the second drive train may both be arranged in the third body section 106). Optionally, the first drive train and the second drive train may both be arranged in different body sections (i.e. one of the first drive train and the second drive train may be arranged in the first body section 103 and one of the first drive train and the second drive train may be arranged in the second body section 105, or one of the first drive train and the second drive train may be arranged in the first body section 103 and one of the first drive train and the second drive train may be arranged in the third body section 106, or one of the first drive train and the second drive train may be arranged in the second body section 105 and one of the first drive train and the second drive train may be arranged in the third body section 106), such that one drive train provides drive to the front wheel 104 and one drive train provides drive to the rear wheel 107.

The second embodiment of foldable cycle 101 as described by Fig. 7 is arranged to be configured in a folded configuration 113 in the same way as that described in the first embodiment of the foldable cycle 1 by Fig. 5 and Fig. 6.

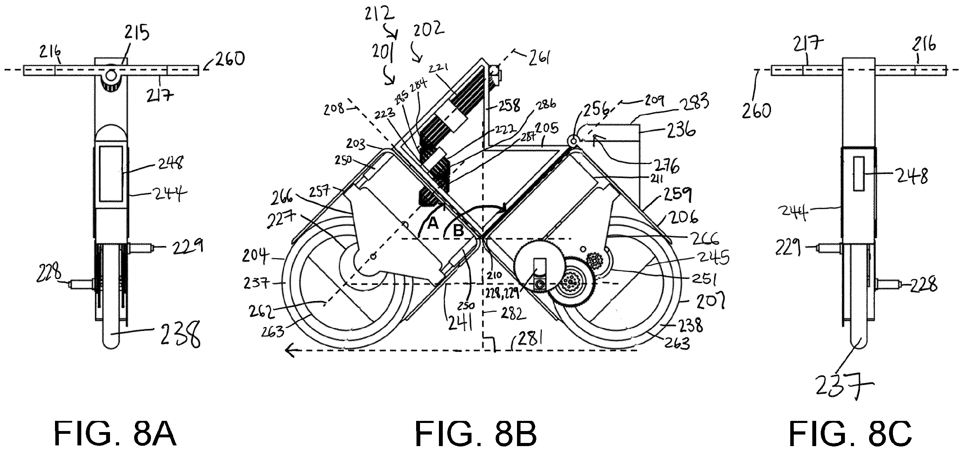

The foldable cycle 201 of Fig. 8 shows the third embodiment of the foldable cycle 201 in an unfolded configuration 202 and as a bicycle 212, as it comprises two wheels. Other embodiments are envisaged wherein the foldable cycle 201 comprises more than two wheels, e.g. three wheels and such embodiments may be referred to as a foldable tricycle. The foldable cycle 201 comprises a first body section 203, a second body section 205 and a third body section 206, the first body section 203 and the third body section 206 comprising a front wheel 204 and a rear wheel 207 respectively. The front wheel 204 is said to be a front wheel 204 because, in the forward direction of travel of the cycle 201 in the unfolded configuration 202, it is the front wheel 204 that leads, i.e. is ahead of the rear wheel 207. The front wheel 204 and the rear wheel 207 are locomotive, ground-engageable wheels for propelling the foldable cycle 201. The front wheel 204 and the rear wheel 207 are centreless, i.e. they are hubless and spokeless. The front wheel 204 and the rear wheel 207 each comprise a tyre, the front wheel 204 comprising a front tyre 237 and the rear wheel 207 comprising a rear tyre 238, the front tyre 237 and the rear tyre 238 each arranged around the outer circumference of the front wheel 204 and the rear wheel 207 respectively. Optionally, the front tyre 237 and the rear tyre 238 may be tubeless.

The second body section 205 comprises a steering apparatus 215 configured to steer the front wheel 204, the steering apparatus 215 comprising a first handlebar 216 and a second handlebar 217 (shown in Fig. 3), wherein the first handlebar 216 and the second handlebar 217 each have a longitudinal axis 260. The second body section 205 further comprises a seat 236 configured to allow a user to sit thereupon, the seat 236 being pivotably connected to the second body section 205. The seat 236 is pivotably connected to the second body section 205 by a pivot 256, wherein the pivot 256 is located at a front portion of the seat 236 and a rear portion of the second body section 205. In another embodiment, the seat 236 may be pivotably connected to the third body section 206 by a pivot 256, wherein the pivot 256 is located at a front portion of the seat 236 and a rear portion of the third body section 206. The seat 236 being pivotably connected to one of the body sections in this way allows the seat 236 to be folded out of the way when the foldable cycle 201 is reconfigured into the folded configuration (not shown in figures for this embodiment, but the folded configuration for this embodiment is further described below) to allow the first body section 203, the second body section 205 and the third body section 206 to fold adjacent to each other. The seat 236 is arranged to rotate about the pivot 256 towards the front wheel 204, such that a surface 283 of the seat 236 arranged to be sat on by the user is adjacent to the second body section 205, i.e. it is rotated about the pivot 256 by 180 degrees.

The first body section 203 is rotationally coupled to the second body section 205 about a first axis 208 inclined with respect to a virtual line 281 that defines the forward direction of travel of the cycle 201 in the unfolded configuration 202, such that the first body section 203 is configured to rotate about the first axis 208 in a first direction of rotation. The third body section 206 is rotationally coupled to the second body section 205 about a second axis 209 inclined with respect to the virtual line 281 that defines the forward direction of travel of the cycle 201 in the unfolded configuration 202 such that the third body section 206 is configured to rotate about the second axis 209 in a second direction of rotation, the first direction of rotation and the second direction of rotation being opposite to each other (i.e. one direction is clockwise when viewed from the front of the foldable cycle, and the other direction is anti-clockwise when viewed from the front of the foldable cycle). The first axis 208 and the second axis 209 are inclined with respect to the virtual line 281 that defines the forward direction of travel of the cycle 201 in the unfolded configuration 202, meaning that the first axis 208 and the second axis 209 turn away from the virtual line 281 that defines the forward direction of travel of the cycle 201 in the unfolded configuration 202 or the first axis 208 and the second axis 209 turn away from a virtual vertical line 282 that extends substantially or generally perpendicular to the virtual line 281 that defines the forward direction of travel of the cycle 201 in the unfolded configuration 202. The term "inclined" is intended to mean the same as "angled" and, as such, the first 208 and second 209 axes of rotation may be inclined (or angled) at an acute angle or at an obtuse angle relative to the forward direction or travel of the cycle 201. The first axis 208 is inclined (or angled), meaning that an acute angle is formed between the first axis 208 and the virtual line 281 that defines the forward direction of travel of the cycle 201 in the unfolded configuration 202 and the second axis 209 is inclined (or angled), meaning that an obtuse angle is formed between the second axis 209 and the virtual line 281 that defines the forward direction of travel of the cycle 201 in the unfolded configuration 202. The first axis 208 is inclined at an acute angle, Angle A, with respect to the forward direction of travel of the cycle 201 and the second axis 209 is inclined at an obtuse angle, Angle B, with respect to the forward direction of travel of the cycle 201. Optionally, in some embodiments, for example in this embodiment, the addition of the magnitude of Angle A to the magnitude of Angle B substantially equals 180 degrees (i.e. Angle A + Angle B = 180 degrees).

Another way of saying that the first axis 208 and the second axis 209 are inclined with respect to a virtual line 281 that defines the forward direction of travel of the cycle 201 in the unfolded configuration 202, is that the first axis 208 and the second axis 209 are inclined (or angled) with respect to a wheelbase 241 of the cycle 201 in the unfolded configuration 202. The wheelbase 241 is defined by a virtual line extending between the centre of the front wheel 204 (i.e. the midpoint of the diameter of the front wheel 204) and the centre of the rear wheel 207 (i.e. the midpoint of the diameter of the rear wheel 207) in the unfolded configuration 202. The virtual line 281 that defines the forward direction of travel of the cycle 201 in the unfolded configuration 202 and the virtual line that defines the wheelbase 241 of the cycle 201 in the unfolded configuration 202 are substantially or generally colinear.

The first axis 208 and the second axis 209 are inclined in opposite directions to each other such that the first axis 208 and the second axis 209 intersect to form a point of intersection 210 in the unfolded configuration 202 of the foldable cycle 201, the point of intersection 210 being located below the second body section 205 when the cycle 201 is in the forward direction of travel in the unfolded configuration 202. The point of intersection 210 may be located at a point between the centre of the front wheel 204 (i.e. the midpoint of the diameter of the front wheel 204) and the centre of the rear wheel 207 (i.e. the midpoint of the diameter of the rear wheel 207) when the cycle 201 is in the forward direction of travel in the unfolded configuration 202. The point of intersection 210 may further be located between the longitudinal axes 260 of the first and the second handlebar 216, 217 and the virtual line that defines the wheelbase 241 when the cycle 201 is in the forward direction of travel in the unfolded configuration 202. The point of intersection 210 may further be located below a centre of rotation of one or both the front 204 and rear 207 wheels (i.e. the point of intersection 210 is located below a line extending between the centre of rotation of the front 204 and rear 207 wheels (i.e. the wheelbase 241); i.e. the point of intersection 210 is located on the opposite side of a line extending between the centre of rotation of the front 204 and rear 207 wheels (i.e. the wheelbase 41) than the side of the line which the handlebars 216, 217 or the seat 236 is located) but wherein the point of intersection 210 is located above the ground, e.g. above a line extending between the lower-most portion of the front 204 and rear 207 wheels. Due to the first axis 208 and the second axis 209 being inclined in opposite directions, the first axis 208 and the second axis 209 form a V-shape 276 when viewed from the left-side or right-side of the foldable cycle 201, the V-shape 276 defining a vertex wherein the vertex of the V-shape 276 and the point of intersection 210 are the same point. The vertex 210 of the V-shape 276 points towards the wheelbase 241 of the foldable cycle 201 in the unfolded configuration 202.

The first axis 208 is inclined with respect to the virtual line 281 that defines the forward direction of travel of the cycle 201 at the first angle, Angle A, wherein Angle A is in the range between 1 degree and 89 degrees, more preferably between 10 degrees and 80 degrees, more preferably between 20 degrees and 70 degrees, more preferably between 30 degrees and 60 degrees, more preferably between 40 degrees and 50 degrees. Alternatively, the first axis 208 is inclined with respect to the virtual line 281 that defines the forward direction of travel of the cycle 201 at the first angle, Angle A, wherein Angle A is less than 90 degrees; optionally less than 60 degrees. In other embodiments the first axis 208 is inclined with respect to the virtual line 281 that defines the forward direction of travel of the cycle 201 at the first angle, Angle A, wherein Angle A is less than 85, 80, 75, 70, 65, 55, 50, 45, 40, 35, 30, 25, 20, 15 or 10 degrees, or any intermediate value or range therebetween.

The second axis 209 is inclined with respect the virtual line 281 that defines the forward direction of travel of the cycle 201 at the second angle, Angle B, wherein Angle B is in the range between 91 degrees and 179 degrees, more preferably between 100 degrees and 170 degrees, more preferably between 110 degrees and 160 degrees, more preferably between 120 degrees and 150 degrees, more preferably between 130 degrees and 140 degrees. Alternatively, the second axis 209 is inclined with respect the virtual line 281 that defines the forward direction of travel of the cycle 201 at the second angle, Angle B, wherein Angle B is less than 180 degrees; optionally less than 150 degrees.

In other embodiments the second axis 209 is inclined with respect the virtual line 281 that defines the forward direction of travel of the cycle 201 at the second angle, Angle B, wherein Angle B is less than 175, 170, 165, 160, 155, 150, 145, 140, 135, 130, 125, 120, 115, 110, 105, or 100 degrees, or any intermediate value or range therebetween.

The first body section 203 comprises a first body section housing 257, the second body section 205 comprises a second body section housing 258 and the third body section 206 comprises a third body section housing 259. The first body section housing 257 and the third body section housing 259 are open-ended rectangular cuboids, an open-ended rectangular cuboid being a cuboid with one face missing (similar to a box without a lid). Each open-ended rectangular cuboid comprises five faces, the five faces comprising two square side faces 244 and three rectangular faces 245. The two square side faces 244 may be opposite to each other, and the three rectangular faces 245 connect the two square side faces 244 by the longest edge of the rectangular faces 245 abutting the edges of the square side faces 244. Advantageously, the first body section housing 257 and the third body section housing 259 being open-ended rectangular cuboids allows the front wheel 204 and the rear wheel 207 to be arranged inside the first body section housing 257 and the third body section housing 259 respectively and allows any internal components to be hidden, improving the aesthetics of the foldable cycle 201 as well as protecting any internal components of the foldable cycle 201.

The front wheel 204 and the rear wheel 207 may be arranged inside the first body section housing 257 and the third body section housing 259, respectively, such that approximately half of the front wheel 204 and approximately half of the rear wheel 207 may be visible outside of their respective body section housing. Alternatively, the front wheel 204 and the rear wheel 207 may be arranged inside the first body section housing 257 and the third body section housing 259, respectively, such that more than half of the front wheel 204 and more than half of the rear wheel 207 may be visible outside of their respective housing. Alternatively, the front wheel 204 and the rear wheel 207 may be arranged inside the first body section housing 257 and the third body section housing 259, respectively, such that less than half of the front wheel 204 and less than half of the rear wheel 207 may be visible outside of the respective housing. The first body section housing 257, the second body section housing 258 and the third body section housing 259 of the foldable cycle 201 may be made from recycled plastic, for example polypropylene or polyethylene. The first body section housing 257, the second body section housing 258 and the third body section housing 259 of the foldable cycle 201 may also be made from lightweight metals or metal alloys, such as aluminium.

The steering apparatus 215 comprises a first steering member 221, a second steering member 222, a third steering member 223, a first gear 284, a second gear 285, a third gear 286 and a fourth gear 287 arranged within the second body section 205. The first gear 284, the second gear 285, third gear 286 and the fourth gear 287 may optionally be bevel gears. The first steering member 221, the second steering member 222 and the third steering member 223 each comprise a longitudinal axis about which they are arranged to rotate. The first steering member 221 is rotationally coupled to the first handlebar 216 at a first end of the first steering member 221 and the second handlebar 217 about a handlebar axis of rotation 261, such that rotation of the first handlebar 216 and the second handlebar 217 about the handlebar axis of rotation 261 causes rotation of the first steering member 221 about the longitudinal axis of the first steering member 221. The first steering member 221 comprises the first gear 284 at an opposing second end of the first steering member 221 to the first handlebar 216 and the second handlebar 217. The second steering member 222 comprises the second gear 285 and the third gear 286 at opposing ends of the second steering member 222. The third steering member 223 is rotationally coupled to the front wheel 204 at a first end of the third steering member 223 about a steering axis 262 of the front wheel 204, such that rotation of the third steering member 223 about the longitudinal axis of the third steering member 223 causes rotation of the front wheel 204 about the steering axis 262. The third steering member 223 comprises the fourth gear 287 at a second opposing end of the third steering member 223 to the front wheel 204. The second steering member 222 is rotationally coupled to the first steering member 221, such that the first gear 284 and the second gear 285 mesh together. The second steering member 222 is rotationally coupled to the third steering member 223, such that the third gear 286 and the fourth gear 287 mesh together. Rotation of the first steering member 221 causes rotation of the second steering member 222 and rotation of the second steering member 222 causes rotation of the third steering member 223. As such a drive path exists between the first handlebar 216 and the second handlebar 217, the first steering member 221, the second steering member 222, the third steering member 223 and the front wheel 204, such that rotation of the first handlebar 216 and the second handlebar 217 about the handlebar axis of rotation 261 causes rotation of the front wheel 204 about the steering axis 262. Therefore, rotation of the first handlebar 216 and the second handlebar 217 about the handlebar axis of rotation 261 causes rotation of the front wheel 204 about the steering axis 162 of the front wheel 204.

Optionally, the second steering member 222 may be rotationally coupled to the first steering member 221 and the third steering member 223 such that the handlebar axis of rotation 261 is offset from the steering axis 262 of the front wheel 204. The longitudinal axis of the first steering member 221 and the longitudinal axis of the third steering member 223 may be substantially or generally parallel to each other and the longitudinal axis of the second steering member 222 may be perpendicular to the longitudinal axis of the first steering member 221 and the longitudinal axis of the third steering member 223. As such the handlebar axis of rotation 261 may be substantially or generally parallel to the steering axis of the front wheel 262. In another embodiment, the handlebar axis of rotation 261 is coaxial with the steering axis 262 of the front wheel 204.

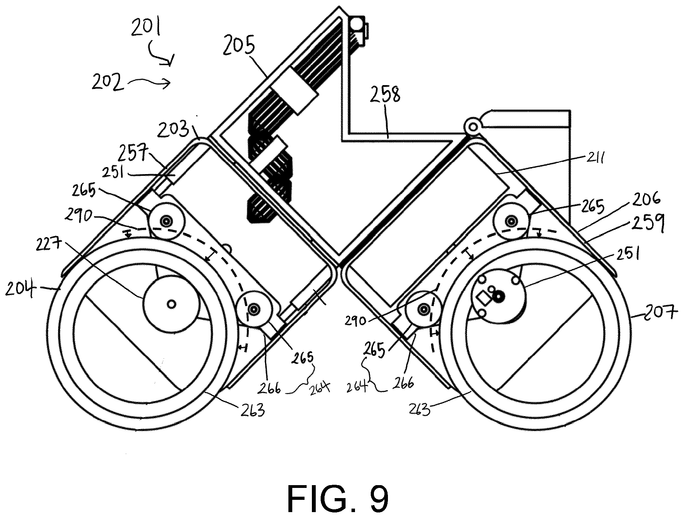

Looking at Fig. 8A - 8C and Fig. 9, one of the first body section 203, the second body section 205 and the third body section 206 of the foldable cycle 201, in this embodiment the first body section 203, may comprise an electric motor 227 configured to provide assistive power and/or exclusive power to the front wheel 204 and/or the rear wheel 207. One of the first body section 203, the second body section 205 and the third body section 206 of the foldable cycle 201, in this embodiment the third body section 207, may comprise a power source 211 arranged to power the electric motor 227. The power source 211 may be a cell, a battery, a supercapacitor or any other suitable power source. The electric motor 227 configured to provide assistive power and/or exclusive power to the front wheel 204 and/or the rear wheel 207 and the power source 211 arranged to power the electric motor 227 may be arranged in different body sections, such as the first body section 203 and the second body section 205, or, as in this embodiment, the first body section 203 and the third body section 206, or the second body section 205 and the third body section 206. The electric motor 227 configured to provide assistive power and/or exclusive power to the front wheel 204 and/or the rear wheel 207 and the power source 211 arranged to power the electric motor 227 may optionally be arranged in the same body section such as the first body section 203, the second body section 205, or the third body section 206.

One of the first body section 203, the second body section 205 and the third body section 206 of the foldable cycle 201 comprises a first foot pedal 228 and a second foot pedal 229 configured such that rotation of the first foot pedal 228 and the second foot pedal 229 drives the rotation of the front wheel 204 and/or the rear wheel 207, thus powering the foldable cycle 201. The first foot pedal 228 and the second foot pedal 229 optionally may be configured such that rotation of the first foot pedal 228 and the second foot pedal 229 provides charge to the power source 211. Optionally, the first foot pedal 228 and the second foot pedal 229 each comprise a foot pedal bias, the foot pedal bias is configured to unfasten the first foot pedal 228 and the second foot pedal 229 from the body section. Advantageously, this allows the cycle 201 to be reconfigured into the folded configuration 213 easily. The first foot pedal 228 and the second foot pedal 229 may be coupled to any one of the first body section 203, the second body section 205 or the third body section 206.

The foldable cycle 201 may comprise a dynamo 234 (not shown in Figs. 8A - 8C or Fig. 9), configured such that rotation of the first foot pedal 228 and/or the second foot pedal 229 provides charge to the power source 211.

The front wheel 204 may comprise a guide surface 263 and the first body section 203 may comprise a wheel-engagement means 264, wherein the wheel-engagement means 264 is configured to engage the guide surface 263. The guide surface 263 may comprise a first side and an opposing second side wherein the wheel-engagement means 264 may be configured to engage either the first side of the guide surface 263, or the second side of the guide surface 263, or both the first side and the second side of the guide surface 263. The guide surface 263 provides a way of mounting the front wheel 204 to the foldable cycle 201. In some embodiments, the guide surface 263 may comprise a circumferential rail wherein the circumferential rail comprises an inner circumferential surface and an outer circumferential surface. The inner circumferential surface of the circumferential rail and the outer circumferential surface of the circumferential rail may be spaced apart such that the inner circumferential surface has a radius that is less than a radius of the outer circumferential surface. The inner circumferential surface of the circumferential rail may be perpendicular to the radius of the inner circumferential surface of the circumferential rail and the outer circumferential surface of the circumferential rail may be perpendicular to the radius of the outer circumferential surface of the circumferential rail. Embodiments in which the guide surface 263 is not a circumferential rail, but in which the guide surface 263 is any other suitable means for engaging the wheel-engagement means 264 and thus mounting the front wheel 204 to the foldable cycle 201, are also envisaged.

The rear wheel 207 may comprise a guide surface 263 and the third body section 206 may comprise a wheel-engagement means 264, wherein the wheel-engagement means 264 is configured to engage the guide surface 263. The guide surface 263 may comprise a first side and an opposing second side wherein the wheel-engagement 264 means may be configured to engage either the first side, or the second side, or both the first side and the second side of the guide surface 263. The first side of the guide surface 263 may comprise a first circumference and the second side of the guide surface 263 may comprise a second circumference. The guide surface 263 provides a way of mounting the rear wheel 207 to the foldable cycle 201. In some embodiments, the guide surface 263 may comprise a circumferential rail wherein the circumferential rail comprises an inner circumferential surface and an outer circumferential surface. The inner circumferential surface of the circumferential rail and the outer circumferential surface of the circumferential rail may be spaced apart such that the inner circumferential surface has a radius that is less than a radius of the outer circumferential surface. The inner circumferential surface of the circumferential rail may be perpendicularto the radius of the inner circumferential surface of the circumferential rail and the outer circumferential surface of the circumferential rail may be perpendicular to the radius of the outer circumferential surface of the circumferential rail. Embodiments in which the guide surface 263 is not a circumferential rail, but in which the guide surface 263 is any other suitable means for engaging the wheel-engagement means 264 and thus mounting the rear wheel 207 to the foldable cycle 201, are also envisaged.

The wheel-engagement means 264 of the first body section 203 comprises a carriage 266 and a plurality of wheels 265 configured to engage the guide surface 263, the plurality of wheels 265 being coupled to the carriage 266. The guide surface 263 of the front wheel 204 may enable certain components to be more readily or more conveniently mounted to, or rotationally coupled to, or moveable around the front wheel 204. The guide surface 263 of the front wheel 204 enables the front wheel 204 to be circumferentially guided through the wheel-engagement means 264. The guide surface 263 is able to support both lateral and vertical loads transmitted from the plurality of wheels 265. The plurality of wheels 265 of the wheel-engagement means 264 of the first body section 203 are configured to locate the front wheel 204 relative to the carriage 266 to allow rotational movement, but also to generally or substantially restrict or limit vertical and/or lateral movement of the carriage 266 out of the plane of rotation of the front wheel 204.

The wheel-engagement means 264 of the third body section 206 comprises a carriage 266 and a plurality of wheels 265 configured to engage the guide surface 263, the plurality of wheels 265 being coupled to the carriage 266. The guide surface 263 of the rear wheel 207 may enable certain components to be more readily or more conveniently mounted to, or rotationally coupled to, or moveable around the rear wheel 207. The guide surface 263 of the rear wheel 207 enables the rear wheel 207 to be circumferentially guided through the wheel-engagement means 264. The guide surface 263 is able to support both lateral and vertical loads transmitted from the plurality of wheels 265. The plurality of wheels 265 of the wheel-engagement means 264 of the third body section 206 are configured to locate the rear wheel 207 relative to the carriage 266 to allow rotational movement, but also to generally or substantially restrict or limit vertical and/or lateral movement of the carriage 266 out of the plane of rotation of the rear wheel 207.

Optionally, the plurality of wheels 265 of the wheel-engagement means 264 of the first body section 203 may be arranged to have an equal number of wheels 265 on the first side of the guide surface 263 and the second side of the guide surface 263. Optionally, the plurality of wheels 265 of the wheel-engagement means 264 of the first body section 203 may be arranged to have a differing number of wheels 265 on the first side of the guide surface 263 and the second side of the guide surface 263. The plurality of wheels 265 of the wheel-engagement means 264 of the first body section 203 are configured to engage the guide surface 263 of the front wheel 204 and to enable rotational movement of the front wheel 204.

The plurality of wheels 265 of the wheel-engagement means 264 of the first body section 203 may be arranged on the carriage 266 such that the plurality of wheels 265 are equally spaced along the width of the carriage 266. In embodiments where there are two or more wheels 265 arranged on the first side of the guide surface 263 of the front wheel 204, the plurality of wheels 265 are arranged on the carriage 266 such that an arc 290 extends between the plurality of wheels 265. In embodiments where there are two or more wheels 265 arranged on the second side of the guide surface 263 of the front wheel 204, the plurality of wheels 265 are arranged on the carriage 266 such that an arc 290 extends between the plurality of wheels 265. The arc 290 is arranged along a segment of the second circumference of the second side of the guide surface 263 of the front wheel 204 such that the plurality of wheels 265 follow the second circumference of the second side of the guide surface 263 of the front wheel 204, i.e. the plurality of wheels 265 run along the second circumference of the second side of the guide surface 263 of the front wheel 204. In Fig. 9, the arc 290 is shown as a dotted line hovering above the second circumference of the second side of the guide surface 263 of the front wheel 204, this is to make the line clear, so that the arc 290 can be seen more easily. The arc 290 of the front wheel 204 in Fig. 9 is still arranged along a segment of the second circumference of the second side of the guide surface 263 of the front wheel 204.

In some embodiments, the second side of the guide surface 263 of the front wheel 204 may comprise the front tyre 237.

Optionally, the plurality of wheels 265 of the wheel-engagement means 264 of the third body section 206 may be arranged to have an equal number of wheels 265 on the first side of the guide surface 263 and the second side of the guide surface 263. Optionally, the plurality of wheels 265 of the wheel-engagement means 264 of the third body section 206 may be arranged to have a differing number of wheels 65 on the first side of the guide surface 263 and the second side of the guide surface 263. The plurality of wheels 265 of the wheel-engagement means 264 of the third body section 206 are configured to engage the guide surface 263 of the rear wheel 207 and to enable rotational movement of the rear wheel 207.

The plurality of wheels 265 of the wheel-engagement means 264 of the third body section 206 may be arranged on the carriage 266 such that the plurality of wheels 265 are equally spaced along the width of the carriage 266. In embodiments where there are two or more wheels 265 arranged on the first side of the guide surface 263 of the rear wheel 207, the plurality of wheels 265 are arranged on the carriage 266 such that an arc 290 extends between the plurality of wheels 265. In embodiments where there are two or more wheels 265 arranged on the second side of the guide surface 263 of the rear wheel 207, the plurality of wheels 265 are arranged on the carriage 266 such that an arc 290 extends between the plurality of wheels 265. The arc 290 is arranged along a segment of the second circumference of the second side of the guide surface 263 of the rear wheel 207 such that the plurality of wheels 265 follow the second circumference of the second side of the guide surface 263 of the rear wheel 207, i.e. the plurality of wheels 265 run along the second circumference of the second side of the guide surface 263 of the rear wheel 207. In Fig. 9, the arc 290 is shown as a dotted line hovering above the second circumference of the second side of the guide surface 263 of the rear wheel 207, this is to make the line clear, so that the arc 290 can be seen more easily. The arc 290 of the rear wheel 207 in Fig. 9 is still arranged along a segment of the second circumference of the second side of the guide surface 263 of the rear wheel 207.

In some embodiments, the second side of the guide surface 263 of the rear wheel 207 may comprise the rear tyre 238.

A reclamation alternator 251, also referred to as a torque braking system 251, may be provided in one of the first body section 203, the second boy section 205 or, as in this embodiment, the third body section 206. The reclamation alternator 251 comprises a regenerative braking system, wherein electricity is generated and provided to the power source 211 whilst the brake (not shown in Figs. 8A - 8C or Fig. 9, however the brake of this embodiment is configured the same as the brake of the first embodiment) is engaged. This is advantageous as the reclamation alternator 251 provides an alternative source of power to the power source 211. The reclamation alternator 211 is the reclamation alternator of each of the embodiments of the present invention, although other reclamation alternators may be used.

In the embodiment of Figs, 8A - 8C and Fig. 9, the electric motor 227 is arranged in one of the first body section 203 or the third body section 206, in this embodiment the first body section 203, such that the electric motor 227 engages the first side of the guide surface 263 of the front wheel 204 (or the rear wheel 207), so as to provide direct drive to the front wheel 204 (or the rear wheel 207). The plurality of wheels 265 of the wheel-engagement means 264 of the first body section 203 (or the third body section 206) are arranged on the opposing second side of the guide surface 263 so as to engage the second side of the guide surface 263 and locate the front wheel 204 (or the rear wheel 207). The electric motor 227 and the plurality of wheels 265 may be equally spaced apart on the carriage 266 such that the electric motor 227 is arranged on a central portion of the carriage 266 and the plurality of wheels 265 are arranged to be spaced apart about the electric motor 227. The plurality of wheels 265 may be arranged on the carriage 266 such that an arc 290 extends between the plurality of wheels 265. The arc 290 that extends between the plurality of wheels 265 can be defined as a part or a portion of a circumference of a virtual circle or ellipse. Optionally, the carriage 266 may be substantially triangular such that the electric motor 266 is arranged at a first vertex of the carriage 266, a first wheel 265 is arranged at the second vertex of the carriage 266 and a second wheel 265 is arranged at the third vertex of the carriage 266.

In some embodiments, the electric motor 227 engages the second side of the guide surface 263 of the front wheel 204 (or the rear wheel 207), so as to provide direct drive to the front wheel 204 (or the rear wheel 207) and the plurality of wheels 265 of the front wheel 204 (or the rear wheel 207) are arranged on the first side of the guide surface 263 so as to engage the first side of the guide surface 263 and locate the front wheel 204 (or the rear wheel 207). The electric motor 227 and the plurality of wheels 265 may be equally spaced apart on the carriage 266 such that the motor 227 is arranged on a central portion of the carriage 266 and the plurality of wheels 265 are arranged to be spaced apart about the motor 227. The plurality of wheels 265 may be arranged on the carriage 266 such that an arc 290 extends between the plurality of wheels 265. The arc 290 that extends between the plurality of wheels 265 can be defined as a part or a portion of a circumference of a virtual circle or ellipse. Optionally, the carriage 266 may be substantially triangular such that the electric motor 266 is arranged at a first vertex of the carriage 266, a first wheel 265 is arranged at the second vertex of the carriage 266 and a second wheel 265 is arranged at the third vertex of the carriage 266.

The reclamation alternator 251 is arranged in one of the first body section 203, the second body section 205 or, as in this embodiment, the third body section 206, such that it engages the first side of the guide surface 263 of the rear wheel 207. The plurality of wheels 265 of the wheel-engagement means 264 of the third body section 206 (or first body section 203) are arranged on the opposing second side of the guide surface 263 so as to engage the second side of the guide surface 263 and locate the rear wheel 207 (or front wheel 204). The reclamation alternator 251 and the plurality of wheels 265 may be equally spaced apart on the carriage 266 such that the reclamation alternator 251 is arranged on a central portion of the carriage 266 and the plurality of wheels 265 are arranged to be spaced apart about the reclamation alternator 251. The plurality of wheels 265 may be arranged on the carriage 266 such that an arc 290 extends between the plurality of wheels 265. The arc 290 that extends between the plurality of wheels 265 can be defined as a part or a portion of a circumference of a virtual circle or ellipse. Optionally, the carriage 266 may be substantially triangular such that the reclamation alternator 251 is arranged at a first vertex of the carriage 266, a first wheel 265 is arranged at the second vertex of the carriage 266 and a second wheel 265 is arranged at the third vertex of the carriage 266.

Optionally, the plurality of wheels 265 may be arranged to have an equal number of wheels 265 on the first side of the guide surface 263 and the second side of the guide surface 263. The plurality of wheels 265 may be arranged to have differing number of wheels 265 on the first side of the guide surface 263 and the second side of the guide surface 263. The plurality of wheels 265 of the front wheel 204 are configured to engage the guide surface 263 and enable rotational movement of the front wheel 204. The plurality of wheels 265 of the rear wheel 207 are configured to engage the guide surface 263 and enable rotational movement of the rear wheel 207.

The guide surface 263, the carriage 266, the plurality of wheels 265 and the electric motor 227 described herein form a wheel-mounting means for use in a foldable cycle 201. The wheel-mounting means described in the third embodiment are suitable for use in each of the embodiments of the present invention, although other wheel-mounting means may be used.

The foldable cycle 201 comprises a first drive train and a second drive train, the first drive train and the second drive train are arranged to drive the rotation of the front wheel 204 and/or the rear wheel 207. The first drive train may comprise the first foot pedal 228, the second foot pedal 229 and the rear wheel 207 wherein rotation of the first foot pedal 228 and the second foot pedal 229 drives the first drive train, and as such the rear wheel 207. Rotation of the first foot pedal 228 and the second foot pedal 229 causes rotation of the rear wheel 207, and therefore the plurality of wheels 265 engage the second side of the guide surface 263 of the rear wheel 207, the plurality of wheels 265 enabling the rear wheel 207 to rotate in its correct alignment. The second drive train may comprise the electric motor 227 and the front wheel 204 wherein rotation of the electric motor 227 drives the first drive train, and by providing direct drive to the first side of the guide surface 263 of the front wheel 204. Rotation of the front wheel 204 causes the plurality of wheels 265 to engage the second side of the guide surface 263 of the front wheel 204, the plurality of wheels 265 enabling the front wheel 204 to rotate in its correct alignment.

Optionally, a number of the plurality of wheels 265 (e.g. one ortwo orthree or four) on the front wheel 204 are arranged to locate the front wheel 204 and/or a number of the plurality of wheels 265 (e.g. one or two or three or four) on the rear wheel 207 are arranged to locate the rear wheel 207. Optionally, a number of the plurality of wheels 265 (e.g. one ortwo orthree or four) on the front wheel 204 and/ora number of the plurality of wheels 265 (e.g. one or two or three or four) on the rear wheel 207 are arranged to form a part of the first drive train or the second drive train to provide drive to front wheel 204 and/or the rear wheel 207.

The first drive train and the second drive train are independent of one another to allow drive to be provided to one of the front wheel 204 and/or the rear wheel 207 by the first foot pedal 228 and the second foot pedal 229 and/or the electric motor 227. The first drive train and the second drive train may both be arranged in the same body section (i.e. the first drive train and the second drive train may both be arranged in the first body section 203 or the first drive train and the second drive train may both be arranged in the second body section 205 or the first drive train and the second drive train may both be arranged in the third body section 206). Optionally, the first drive train and the second drive train may both be arranged in different body sections (i.e. one of the first drive train and the second drive train may be arranged in the first body section 203 and one of the first drive train and the second drive train may be arranged in the second body section 205, or one of the first drive train and the second drive train may be arranged in the first body section 203 and one of the first drive train and the second drive train may be arranged in the third body section 206, or one of the first drive train and the second drive train may be arranged in the second body section 205 and one of the first drive train and the second drive train may be arranged in the third body section 206), such that one drive train provides drive to the front wheel 204 and one drive train provides drive to the rear wheel 207.

Turning to Fig. 8B, the first body section 203 comprise a suspension means 250. Optionally the suspension means 250 may be arranged in the third body section. The suspension means 250 acts as a shock absorber for when the foldable cycle 201 is going over uneven terrain, making the journey more comfortable for the user. The suspension means 250 may be provided on the front wheel 204 and/or the rear wheel 207. The suspension means 250 may comprise one or more springs wherein the springs may be coils, compressed air, or elastomeric material. More preferably, the suspension means 250 may be air springs, such as nitrogen gas springs, advantageously air springs are very lightweight as the spring itself is provided by compressed air rather than a coil of metal. Air springs can also be easily adjusted for varying levels of suspension (i.e. for use on different terrains) by changing the air pressure within them. As shown in Fig. 8B, the suspension means 250 comprises a first air spring 250 and a second air spring 250 arranged at two opposite corners of the first body section 203. More specifically, the first air spring 250 and the second air spring 250 are disposed on either side of the front wheel 204 in the plane of rotation of the front wheel 204. The air springs 250 are spaced apart about the steering axis 262, such that the distance between the first air spring 250 and the second air spring 250 is the approximately the diameter of the front wheel 204. The suspension means 250 (such as the first air spring 250 and the second air spring 250) may be substantially arranged in the same plane as the plane of rotation of the front wheel 204. The suspension means 250 may be any other suitable type of suspension, such as leaf springs, coil spring or torsion bars. The suspension means 250 described in the third embodiment are the suspension means of each of the embodiments of the present invention, although other suspension means may be used.

The third embodiment of foldable cycle 201 as described by Fig. 8 is arranged to be configured in a folded configuration 213 in the same way as that described in the first embodiment of the foldable cycle 201 by Fig. 5 and Fig. 6.

Fig. 10 shows the embodiment of Figs. 8A - 8C in the unfolded configuration. The foldable cycle 201 comprises a plurality of solar panels 226 on the side faces 244 of the first body section 203 and the third body section 206 foldable cycle 201, the plurality of solar panels arranged to charge the power source 211 (Fig. 8B). Optionally, the plurality of solar panels 226 are arranged only on the side faces 244 of the first body section 203 and the third body section 206 foldable cycle 201. Optionally, the plurality of solar panels 226 are arranged only on the rectangular faces 245 (Fig. 8A and 8C) of the first body section 203 and the third body section 206 foldable cycle 201. The plurality of solar panels 226 may optionally power the electric motor 227 (Fig. 8B) directly. Furthermore, it is advantageous to provide the solar panels 226 on the side faces 244 of the first body section 3 and the third body section 6 as these are the faces with the largest surface area and can therefore gain the most power from solar energy.

Fig. 10 shows the foldable cycle 201 in the unfolded configuration 202, comprising a kickstand 235. The kickstand 235 is provided on one side of one of the first body section 203, the second body section 205 or the third body section 206, in the embodiment of Fig. 10, the kickstand 235 is provided on the third body section. The kickstand is suitable for use with any embodiment of the foldable cycle 1, 101, 201. The kickstand 235 is arranged to allow the foldable cycle 201 to remain upright in the unfolded configuration 202 when it is not in use (i.e. not being ridden), without having to lean the foldable cycle 201 against another object or the foldable cycle 201 having to be held by the user, as the kickstand 235 helps to balance the foldable cycle 201. The kickstand 235 has a first position in which it is arranged to support the cycle 201 on the ground and a second position in which it is not so arranged. The kickstand 235 is coupled to one side of one of the first body section 203, the second body section 205 or the third body section 206 such that it can be moved from the first position to the second position. The first position is such that an end portion 269 of the kickstand 235 is arranged to engage with the ground and the second position is such that the kickstand 235 is arranged such that it does not engage with the ground and is adjacent to one of the first body section 203, the second body section 205 or the third body section 206. The kickstand 235 is held in either the first position or the second position by any suitable means, such as a bias (e.g. a spring that is stretched when the kickstand 235 is between the first and second position and less stretched when the kickstand 235 is in the first position or the second position) or a detent means.

It is envisaged that the skilled person in the art may make various changes to the embodiments specifically described above without departing from the scope of the invention.

## Claims

1. A foldable cycle having a folded configuration and an unfolded configuration, the foldable cycle comprising:
a first body section, wherein the first body section comprises a front wheel of the cycle;
a second body section;
a third body section, wherein the third body section comprises a rear wheel of the cycle;
wherein the first body section is rotationally coupled to the second body section about a first axis inclined with respect to the forward direction of travel of the cycle in the unfolded configuration such that the first body section is configured to rotate about the first axis in a first direction of rotation; and
wherein the third body section is rotationally coupled to the second body section about a second axis inclined with respect to the forward direction of travel of the cycle in the unfolded configuration such that the third body section is configured to rotate about the second axis in a second direction of rotation.

2. The foldable cycle as claimed in Claim 1, wherein the front wheel and the rear wheel are centreless.

3. The foldable cycle as claimed in Claim 1 or 2, wherein the second body section comprises a steering apparatus configured to steer the front wheel, the steering apparatus comprising a first handlebar and a second handlebar, wherein the first handlebar and the second handlebar comprise a handlebar axis of rotation about which the first and second handlebars are configured to rotate together.

4. The foldable cycle as claimed in Claim 3, wherein the first handlebar is pivotably connected to the second handlebar such that the first handlebar and the second handlebar are reconfigurable between a handlebar folded configuration and a handlebar unfolded configuration, optionally wherein the first handlebar and the second handlebar are configured to be arranged in the handlebar folded configuration in the folded configuration of the cycle and the first handlebar and the second handlebar are configured to be in the handlebar unfolded configuration in the unfolded configuration of the cycle.

5. The foldable cycle as claimed in Claim 3 or Claim 4, wherein the steering apparatus comprises a first steering member, a second steering member and a third steering member, the first steering member being coupled to the first handlebar and the second handlebar about the handlebar axis of rotation , and wherein rotation of the third steering member causes rotation of the front wheel about a steering axis of the front wheel, wherein rotation of the first steering member causes rotation of the second steering member and rotation of the second steering member causes rotation of the third steering member, so as to define a drive path between the first steering member, the second steering member, and the third steering member.

6. The foldable cycle as claimed in any preceding claim, wherein the first axis and the second axis intersect to form a point of intersection when the foldable cycle is in the unfolded configuration.

7. The foldable cycle as claimed in any preceding claim, wherein the first direction of rotation and the second direction of rotation are opposite to each other.

8. The foldable cycle as claimed in any preceding claim, wherein the first body section is rotationally coupled to the second body section by a first hinge and the third body section is rotationally coupled to the second body section by a second hinge.

9. The foldable cycle as claimed in any preceding claim, wherein the first body section and the second body section comprise a rotation lock, the rotation lock comprising a locked configuration configured to prevent rotational movement of the first body section with respect to the second body section about the first axis of rotation and the rotation lock comprising an unlocked configuration configured to allow rotational movement of the first body section with respect to the second body section about the first axis of rotation.

10. The foldable cycle as claimed in claim 9 when dependent on claim 3, wherein the rotation lock comprises a bias, wherein the bias is configured such that moving the first handlebar and the second handlebar away from the front wheel along the handlebar axis of rotation causes the rotation lock to reconfigure from the locked configuration to the unlocked configuration so as to allow rotational movement of the first body section with respect to the second body section about the first axis.

11. The foldable cycle as claimed in any preceding claim, wherein, in the folded configuration, the first body section, the second body section and the third body section together define a stacked configuration.

12. The foldable cycle as claimed in any preceding claim, wherein the foldable cycle comprises an electric motor configured to provide assistive and/or exclusive power to either the front wheel and/or the rear wheel and a power source configured to power the electric motor.

13. The foldable cycle as claimed in claim 12, wherein the foldable cycle comprises a plurality of solar panels arranged to charge the power source.

14. The foldable cycle as claimed in claim 12 or claim 13, wherein one of the body sections comprises a first foot pedal and a second foot pedal, configured such that the rotation of the first foot pedal and the second foot pedal rotates one of the front wheel or the rear wheel, optionally wherein rotation of the first foot pedal and the second foot pedal provides charge to the power source.

15. The foldable cycle as claimed in any preceding claim, wherein the front wheel comprises a guide surface, the guide surface comprising a first side and an opposing second side and/or wherein the rear wheel comprises a guide surface, the guide surface comprising a first side and an opposing second side.

16. The foldable cycle as claimed in claim 15, wherein the first body section comprises a first wheel-engagement means, the first wheel-engagement means comprising a first carriage and a first plurality of wheels, the first plurality of wheels being configured to engage the guide surface of the front wheel and/or wherein the third body section comprises a second wheel-engagement means, the second wheel-engagement means comprising a second carriage and a second plurality of wheels, the second plurality of wheels being configured to engage the guide surface of the rear wheel.

17. The foldable cycle as claimed in claim 16, wherein the first plurality of wheels of the first wheel-engagement means are configured to engage the first side and/or the opposing second side of the guide surface of the front wheel and/or the second plurality of wheels of the second wheel-engagement means are configured to engage the first side and/or the opposing second side of the guide surface of the rear wheel.

18. The foldable cycle as claimed in claim 16 or 17, wherein the guide surface of the front wheel comprises a circumferential rail of the front wheel, wherein the circumferential rail of the front wheel comprises an inner circumferential surface of the circumferential rail of the front wheel and an outer circumferential surface of the circumferential rail of the front wheel, wherein the first plurality of wheels are configured to locate the inner circumferential surface of the circumferential rail of the front wheel and/or the outer circumferential surface of the circumferential rail of the front wheel so as to locate the outer circumferential surface of the circumferential rail of the front wheel relative to the first carriage and/or wherein the guide surface of the rear wheel comprises a circumferential rail of the rear wheel, wherein the circumferential rail of the rear wheel comprises an inner circumferential surface of the circumferential rail of the rear wheel and an outer circumferential surface of the circumferential rail of the rear wheel, wherein the second plurality of wheels are configured to locate the inner circumferential surface of the circumferential rail of the rear wheel and/or the outer circumferential surface of the circumferential rail of the rear wheel so as to locate the outer circumferential surface of the circumferential rail of the rear wheel relative to the first carriage.

19. The foldable cycle as claimed in any one of claims 16 to 18 when dependent on claim 12, wherein the electric motor is configured to provide drive to the first side of the guide surface of the front wheel and the first plurality of wheels are configured to locate the opposing second side of the guide surface of the front wheel or wherein the electric motor is configured to provide drive to the first side of the guide surface of the rear wheel and the second plurality of wheels of the rear wheel are configured to locate the opposing second side of the guide surface of the rear wheel.

20. The foldable cycle as claimed in any one of claims 16 to 18, wherein the foldable cycle comprises a reclamation alternator, the reclamation alternator being configured to engage the first side of the guide surface of the rear wheel such that kinetic energy generated by the rear wheel is transferred to the reclamation alternator and the second plurality of wheels are configured to engage the opposing second side of the guide surface of the rear wheel or the reclamation alternator being configured to engage the first side of the guide surface of the front wheel such that kinetic energy generated by the front wheel is transferred to the reclamation alternator and the first plurality of wheels are configured to engage the opposing second side of the guide surface of the front wheel.

21. The foldable cycle as claimed in any preceding claim, wherein one of the body sections comprises a first drive train and a second drive train.

22. The foldable cycle as claimed in claim 21 when dependent on claim 14, wherein the first drive train is driven by rotation of the first foot pedal and the second foot pedal.

23. The foldable cycle as claimed in claim 21 or claim 22 when dependent on claim 12, wherein the second drive train is driven by the electric motor.

24. The foldable cycle as claimed in any one of claims 21 to 23, wherein the first drive train is configured to drive the rear wheel.

25. The foldable cycle as claimed in any one of claims 21 to 24, wherein the second drive train is configured to drive the front wheel.

26. The foldable cycle as claimed in any preceding claim, wherein the foldable cycle is a bicycle or a tricycle.

27. A wheel-mounting means for use in a foldable cycle having a wheel having a plane of rotation, the wheel-mounting means comprising:
a guide surface, wherein the guide surface comprises a first side and an opposing second side;
a wheel-engagement means wherein the wheel-engagement means comprises a carriage and a plurality of wheels, wherein the plurality of wheels are coupled to the carriage;
wherein the carriage is rotatable about the guide surface;
an electric motor, wherein the electric motor is coupled to the carriage;
wherein the electric motor is configured to provide drive to the first side of the guide surface so as to rotate the guide surface with respect to the carriage; and
wherein the plurality of wheels are configured to engage the opposing second side of the guide surface so as to locate the second side of the guide surface with respect to the carriage.

28. The wheel-mounting means as claimed in claim 27, wherein the plurality of wheels are coupled to the carriage such that they are spaced apart about the electric motor, wherein the electric motor is configured to provide drive to the first side of the guide surface so as to rotate the guide surface with respect to the carriage and the plurality of wheels are configured to locate the opposing second side of the guide surface with respect to the carriage.

29. The wheel-mounting means as claimed in claim 27 or claim 28, wherein the plurality of wheels are coupled to the carriage such that the plurality of wheels define an arc, wherein the first side of the guide surface comprises a first circumference and the second side of the guide surface comprises a second circumference, wherein the arc is arranged along a segment of the first circumference of the first side of the guide surface or wherein the arc is arranged along a segment of the second circumference of the second side of the guide surface..

30. The wheel-mounting means as claimed in any one of claim 27 to 29, wherein the guide surface comprises a circumferential rail wherein the circumferential rail comprises an inner circumferential surface and an outer circumferential surface, wherein the electric motor is configured to provide drive to the inner circumferential surface of the circumferential rail and the plurality of wheels are configured to engage the outer circumferential surface of the circumferential rail so as to locate the outer circumferential surface of the circumferential rail.

31. The wheel-mounting means as claimed in any one of claims 27 to 29, wherein the guide surface comprises a circumferential rail wherein the circumferential rail comprises an inner circumferential surface and an outer circumferential surface, wherein the electric motor is configured to provide drive to the outer circumferential surface of the circumferential rail and the plurality of wheels are configured to engage the inner circumferential surface of the circumferential rail so as to locate the inner circumferential surface of the circumferential rail.

32. The wheel-mounting means as claimed in any one of claims 27 to 31, wherein the carriage comprises a first suspension means and a second suspension means, wherein the first suspension means and the second suspension means are coupled to the carriage such that they are spaced apart about the electric motor and substantially aligned with the plane of rotation of the wheel of the foldable cycle.
